# EUROPÄISCHE PATENTSCHRIFT

(11) **EP 3 529 674 B1**
(45) Veröffentlichungstag und Bekanntmachung des Hinweises auf die Patenterteilung: **02.07.2025**
(21) Anmeldenummer: 17800395.0
(22) Anmeldetag: 20.10.2017
(51) Int. Cl.: G01S 11/08

(54) **INNENRAUM-ORTUNG-BASIERTE STEUERUNG VON FERTIGUNGSPROZESSEN IN DER METALLVERARBEITENDEN INDUSTRIE**
INTERIOR TRACKING SYSTEM-BASED CONTROL OF MANUFACTURING PROCESSES IN THE METALWORKING INDUSTRY
COMMANDE, BASÉE SUR LA LOCALISATION DANS UN ESPACE INTÉRIEUR, DE PROCESSUS DE FABRICATION DANS L'INDUSTRIE DE TRANSFORMATION DES MÉTAUX

(30) Priorität: 21.10.2016 DE 102016120132; 05.09.2017 DE 102017120378
(43) Veröffentlichungstag der Anmeldung: 28.08.2019
(73) Patentinhaber: TRUMPF Werkzeugmaschinen SE + Co. KG, 71254 Ditzingen (DE)
(72) Erfinder: KIEFER, Manuel, 74889 Sinsheim (DE); OTTNAD, Jens, 76199 Karlsruhe (DE); SCHWARZ, Benjamin, 70825 Korntal-Münchingen (DE); WEISS, Korbinian, 70825 Korntal (DE); SCHNEIDER, Ulrich, 70563 Stuttgart (DE)
(74) Vertreter: Trumpf Patentabteilung
(86) Internationale Anmeldenummer: PCT/EP2017/076869
(87) Internationale Veröffentlichungsnummer: WO 2018/073421

(56) Entgegenhaltungen:
- EP-A1- 1 719 030
- DE-A1- 102013 018 703
- DE-A1- 102014 217 568
- ANONYMOUS: "Pozyx: accurate indoor positioning for Arduino -Use Arduino for Projects", 12 December 2015 (2015-12-12), XP055453364, Retrieved from the Internet <URL:http://duino4projects.com/pozyx-accurate-indoor-positioning-arduino/> [retrieved on 20180222]
- ENRICO KÖPPE: "Lokalisierung sich bewegender Objekte innerhalb und außerhalb von Gebäuden", 18 June 2014 (2014-06-18), pages 1-vi,1 - 149, XP055452795, Retrieved from the Internet <URL:http://www.diss.fu-berlin.de/diss/servlets/MCRFileNodeServlet/FUDISS_derivate_000000015646/Arbeitx2014-08xonlinexVersion.pdf> [retrieved on 20180221]
- KEVIN CURRAN ET AL: "An evaluation of indoor location determination technologies", JOURNAL OF LOCATION BASED SERVICES, vol. 5, no. 2, 1 June 2011 (2011-06-01), pages 61 - 78, XP055452927, ISSN: 1748-9725, DOI: 10.1080/17489725.2011.562927
- RAY Y. ZHONG ET AL: "RFID-enabled real-time manufacturing execution system for mass-customization production", ROBOTICS AND COMPUTER-INTEGRATED MANUFACTURING, vol. 29, no. 2, 13 September 2012 (2012-09-13), pages 283 - 292, XP055103098, ISSN: 0736-5845, DOI: 10.1016/j.rcim.2012.08.001

## Beschreibung

Die vorliegende Erfindung betrifft ein Verfahren zur Überwachung und Steuerung von Fertigungsprozessen, insbesondere von Prozessabläufen bei der industriellen Fertigung von Werkstücken in der Stahl- und/oder Blechverarbeitung. Ferner betrifft die Erfindung ein System zur Werkstückpositionsüberwachung in Fertigungshallen der metallverarbeitenden Industrie, insbesondere bei der Stahl- und/oder Blechverarbeitung. Ferner betrifft die Erfindung die Zuordnung von Werkstücken zu Prozessabläufen im Rahmen der Fertigungssteuerung.

Beispielhaft für die metallverarbeitende Industrie werden in der industriellen Stahl- und/oder Blechverarbeitung oft viele Teile unterschiedlicher Größe verschiedensten Verarbeitungsschritten zugeführt. So werden beispielsweise Werkstücke an Werkzeugmaschinen, z. B. Laserschnittgut oder gestanzte Blechteile, absortiert und weiteren Verarbeitungsschritten zugeführt. Geschnittene oder gestanzte Werkstücke werden dabei nach dem Bearbeitungsvorgang häufig in einem Verbund dem jeweiligen nachgelagerten Produktionsschritt zur Verfügung gestellt. Die verschiedenen Prozessabläufe werden üblicherweise basierend auf einem visuellen Abgleich mit Papier-basierten Unterlagen manuell durchgeführt. Werden jedoch viele unterschiedliche Teilformen geschnitten, verschiedenste Bearbeitungsschritte durchgeführt und unterschiedliche Bereiche in einer Fertigungshalle für die Stahl- und/oder Blechverarbeitung angefahren, so werden derartige Überwachungs- und Steuerungsvorgänge aufwändig und fehleranfällig. So kann eine hohe Teilevielfalt Fehler bei der Teilezuordnung und den nachfolgenden Bearbeitungsschritten, z. B. beim auftragsspezifischen Ablegen in vorgesehenen Werkstücksammelstelleneinheiten oder beim Überstellen zum nachfolgenden Bearbeitungsschritt, hervorrufen. Werden z. B. Teile falsch abgelegt, kann ein nachfolgender Verarbeitungsschritt negativ beeinträchtigt werden, z. B. fehlerhaft durchgeführt werden.

So wird ein physischer Materialfluss meist diskret an Buchungsstationen manuell mit durchzuführenden Bearbeitungsschritten synchronisiert, sodass oft keine detaillierte oder nur eine verzögerte Auswertung stattfinden kann.

Beispielsweise aus den (noch unveröffentlichten) deutschen Patentanmeldungen DE 10 2016 120 132 A1 ("Werkstücksammelstelleneinheit und Verfahren zur Unterstützung der Bearbeitung von Werkstücken") und DE 10 2016 120 131 A1 ("Absortierunterstützungsverfahren und Flachbettwerkzeugmaschine") mit Anmeldetag 21. Oktober 2016 sind Verfahren zum Unterstützen des Absortiervorgangs von mit einer Flachbettwerkzeugmaschine erzeugten Werkstücken, allgemein Verfahren zur Unterstützung der Bearbeitung von Werkstücken, bekannt. Ferner ist aus der deutschen Patentanmeldung DE 10 2017 107 357 A1 "Absortierunterstützungsverfahren und Flachbettwerkzeugmaschine" mit Anmeldetag 5. April 2017 ein Unterstützungsverfahren beim Absortieren von z. B. Schnittgut einer Flachbettwerkzeugmaschine bekannt. Die genannten deutschen Patentanmeldungen werden hierin vollumfänglich aufgenommen.

Aus der US 2016/0100289 A1 ist ein Lokalisierungs- und Verfolgungssystem zum Bestimmen von Positionen mobiler drahtloser Vorrichtungen beispielsweise mithilfe der "ultra-wideband" (UWB)-Technologie bekannt, wobei beispielsweise durch Berechnen von Ankunftszeitunterschieden die Positionen der Vorrichtungen gewonnen werden. Auf der UWB-Technologie basierende Bewegungssensoren, die u. a. mit Beschleunigungssensoren erweitert sein können, werden gemäß der US 2015/0356332 A1 beispielsweise für die Leistungsanalyse im Sport offenbart.

EP 1 719 030 A1 beschreibt Verfahren und Systeme zur Erfassung der exakten Positionen von Flugzeuggroßkomponenten. Dabei kommt unter anderem ein erstes Positionsmesssystem zum Einsatz, welches eine Vielzahl von in einer Fertigungseinrichtung verteilte Sender und Sensoren umfasst, wobei jeweils mindestens zwei Sensoren fest mit einer Flugzeuggroßkomponente verbunden sind. Mehrere Sensoren pro Flugzeuggroßkomponente sind für das exakte Zusammenfügen von zwei Flugzeuggroßkomponenten notwendig, um die korrekte räumliche Orientierung der einzelnen Flugzeuggroßkomponenten gewährleisten zu können. Als erste Positionsmesssysteme werden dabei infratorbasierte und laserbasierte Systeme vorgeschlagen.

Ferner wird verwiesen auf das Dokument "Lokalisierung sich bewegender Objekte innerhalb und außerhalb von Gebäuden", Enrico Köppe, 18. Juni 2014, XP055452795, welches die "Lokalisierung sich bewegender Objekte innerhalb und außerhalb von Gebäuden"betrifft und zwar ohne Nutzung lokaler Infrastruktur und mit dem Zweck eine genaue Lokalisierung sich bewegender Objekte innerhalb von Gebäuden durchzuführen.

Darüber hinaus wird auf das Dokument "RFID-enabled real-time manufacturing execution system for mass-customization production", Zhong et al., Robotics and Computer-integrated Manufacturing, Bd. 29, Nr.2, XP055103098 verwiesen. Diese Offenbarung beschreibt ein RFID-basiertes "manufacturing execution system" bei dem eine Vielzahl von RFID-Einheiten in einem Fertigungsbereich eingesetzt werden, um Produktionsobjekte nachzuverfolgen und Echtzeit-Produktionsdaten zu erfassen. Kritische Produktionskomponenten werden dabei mit RFID-tags versehen, einzelne Fertigungsstationen mit RFID-readers und Mitarbeiter mit mobilen Auslesegeräten. Der RFID-tag ist dabei der jeweiligen kritischen Produktionskomponente zugeordnet und trägt komponentenspezifische, für den Fertigungsprozess relevante Informationen, die mit Hilfe der RFID-reader sowie der mobilen Auslesegeräte ausgelesen werden können. Kevin Curran et al "An evaluation of indoor location determination technologies", doi:10.1080/17489725.2011.562927, offenbart eine Übersicht verschiedener Innenraum-Lokalisierungssysteme.

Ferner offenbart Anonymous: "Pozyx: accurate indoor positioning for Arduino-Use Arduino for Projects", 12. Dez. 2015, XP055453364 eine Verwendung von UWB zur Positionierung im Innen- und Außenraum.

DE 102014 217 568 A1 offenbart ein Verfahren und eine Anordnung zur Überwachung eine Position eines Handwerkzeuges mithilfe eines Bluetoothmoduls.

DE 10 2013 018 703 A1 offenbart eine Vorrichtung zur Verbesserung von Fertigungsprozessen, insbesondere von Montageprozessen von Maschinen oder Geräten, mit einer beispielsweise auf Triangulation basierenden Ortungsvorrichtung. Beispiele für Ortungsgegenstände sind ein Schrauber, ein Handschuh sowie ein Montageteil. Die Ortung der Ortungsgegenstände erfolgt mit Ortungsvorrichtungen, die ortsfest zum Werkstück angeordnet sind. Es wird also eine relative Ordnung bezüglich eines sich bewegenden Werkstücks und einem der sich mitbewegenden Ortungssysteme durchgeführt. Beispielsweise bewegt sich das Werkstück (zum Beispiel ein Auto) auf einem Förderband, auf dem auch die Ortungsvorrichtungen mit befördert werden.

Einem Aspekt dieser Offenbarung liegt die Aufgabe zugrunde, Verfahren und Systeme vorzuschlagen, die insbesondere im Umfeld der Stahl- und/oder Blechverarbeitung - allgemein Metallverarbeitung - Fertigungsprozesse intelligent unterstützen können.

Zumindest eine dieser Aufgaben wird gelöst durch ein Verfahren zur Fertigungssteuerung nach Anspruch 1, durch ein Innenraum-Ortungssystem nach Anspruch 6, durch ein Fertigungssteuerungssystem nach Anspruch 8, die Verwendung eines Innenraum-Ortungssystems nach Anspruch 11 und ein Verfahren zur industriellen Fertigung eines Endprodukts nach Anspruch 13. Die Erfindung ist in den unabhängigen Ansprüchen definiert. Weiterbildungen sind in den Unteransprüchen angegeben.

In einem Aspekt weist ein Verfahren zur, durch eine Innenraum-Ortung unterstützten, Fertigungssteuerung von Prozessabläufen bei der industriellen Bearbeitung von Werkstücken (23), insbesondere in der Stahl- und/oder Blechverarbeitung, in einer Fertigungshalle zur Fertigung eines Endprodukts, folgende Schritte auf:
Bereitstellen mehrerer fest in der Fertigungshalle installierter Sende-Empfangseinheiten, mindestens einer Mobileinheit und einer Analyseeinheit, wobei die Sende-Empfangseinheiten und die Mobileinheit zum Aussenden und Empfangen von elektromagnetischen Signalen ausgebildet ist und die Analyseeinheit ausgebildet ist, aus Laufzeiten der elektromagnetischen Signale zwischen den Sende-Empfangseinheiten und der Mobileinheit die Positionen der Mobileinheit in der Fertigungshalle zu bestimmen,
Zuordnen der Mobileinheit zu mindestens einem Werkstück,
Bestimmen der Position des mindestens einen zugeordneten Werkstücks durch Lokalisierung der zugeordneten Mobileinheit mit dem Innenraum-Ortungssystem und
Einbinden der bestimmten Position in die Fertigungssteuerung der Industriefertigungsanlage zur Fertigung des Endprodukts.

In einem weiteren Aspekt weist ein Innenraum-Ortungssystem zur Unterstützung der Fertigungssteuerung von Prozessabläufen bei der industriellen Fertigung von Werkstücken, insbesondere in der Stahl- und/oder Blechverarbeitung, in einer Fertigungshalle mehrere fest in der Fertigungshalle installierten Sende-Empfangseinheiten, mindestens eine Mobileinheit und eine Analyseeinheit auf. Die Sende-Empfangseinheiten und die mindestens eine Mobileinheit sind zum Aussenden und Empfangen von elektromagnetischen Signalen ausgebildet. Die Analyseeinheit ist ausgebildet zum Bestimmen von Laufzeiten der elektromagnetischen Signale zwischen den Sende-Empfangseinheiten und der mindestens einen Mobileinheit und zum Bestimmen der Position der mindestens einen Mobileinheit in der Fertigungshalle aus den Laufzeiten der elektromagnetischen Signale.

In einem weiteren Aspekt weist ein Fertigungssteuerungssystem zur Steuerung von Fertigungsprozessen in einer Fertigungshalle, insbesondere einer stahl- und/oder blechverarbeitenden Industriefertigungsanlage, ein derartiges Innenraum-Ortungssystem auf. Das Innenraum-Ortungssystem ist zum Austausch und Bereitstellen von Daten zur Position von mindestens einer Mobileinheit in der Fertigungshalle als Teil des Fertigungssteuerungssystems ausgebildet, und das Fertigungssteuerungssystem ist dazu ausgebildet, die gewonnene Position der mindestens einen Mobileinheit mindestens einem Werkstück zuzuordnen und in die Fertigungssteuerung einzubeziehen.

Ein weiterer Aspekt betrifft die Verwendung eines derartigen Innenraum-Ortungssystems bei der Fertigungssteuerung, wobei aus den Laufzeiten der elektromagnetischen Signale die Positionen der Mobileinheiten, insbesondere mit einer Genauigkeit von kleiner 30 cm, bestimmt werden. Dabei erfolgt die Verwendung des Innenraum-Ortungssystems zur
- Zuordnung einer der Mobileinheiten zu mindestens einem Werkstück in einer metallverarbeitenden, insbesondere stahl- und/oder blechverarbeitenden, Industriefertigungsanlage,
- Positionsbestimmung des mindestens einen Werkstücks durch Lokalisierung der zugeordneten Mobileinheit mit dem Innenraum-Ortungssystem und
- Einbindung des Innenraum-Ortungssystems in ein Fertigungssteuerungssystem der Industriefertigungsanlage.

In einem weiteren Aspekt umfasst ein Verfahren zur industriellen Fertigung eines Endprodukts mittels eines Fertigungssteuerungssystems (hierin auch als MES (Manufacturing Execution System) bezeichnet) die folgenden Schritte:
- Entgegennehmen eines Fertigungsauftrags zur Fertigung des Endprodukts aus einem Werkstück mit einem in einer Datenverarbeitungsvorrichtung implementierten MES des Fertigungssteuerungssystems,
- Auswählen einzelner Bearbeitungsschritte mit dem MES,
- Bestimmen einer Reihenfolge der Bearbeitungsschritte mit dem MES, wobei die Bearbeitungsschritte einzelne oder mehrere der folgenden Vorgänge umfassen: Schneiden, insbesondere Laserschneiden, Stanzen, Biegen, Bohren, Gewindeschneiden, Schleifen, Zusammenfügen, Schweißen, Nieten, Schrauben, Pressen, Behandeln der Kanten und Oberflächen;
- Datentechnisches Zuordnen der Bearbeitungsschritte zu einer Maschine oder einer Arbeitsplatzeinheit,
- Datentechnisches Zuordnen des Fertigungsauftrags zu einem Mobileinheitsdatensatz in dem MES,
- Fertigen eines Werkstücks für das Endprodukt, wobei es insbesondere zu einem Teil des Endprodukts nach einem ersten der Bearbeitungsschritte an der dem Bearbeitungsschritt zugewiesenen Maschine oder Arbeitsplatzeinheit bearbeitet wird,
- Räumliches Zuordnen der dem Fertigungsauftrag zugeordneten Mobileinheit zu dem gefertigten Werkstück,
- Speichern einer Statusänderung des Fertigungsauftrags im MES,
- Transport des gefertigten Werkstücks zusammen mit der Mobileinheit gemäß dem Fertigungsauftrag zu der nächsten Maschine oder Arbeitsplatzeinheit in der vorbestimmten Reihenfolge,
- Durchführen des Bearbeitungsschritts an dieser Maschine oder Arbeitsplatzeinheit,
- Speichern einer Statusänderung des Fertigungsauftrags im MES und
- Durchführen der Bearbeitungsschritte des Fertigungsauftrags mit dem MES,
wobei die Position der Mobileinheit mit dem Ortungssystems auf Basis von elektromagnetischen Signalen jederzeit durch das MES bestimmbar ist und das MES zu jeder Zeit über Daten zum aktuellen Status und zur aktuellen Position des Werkstücks verfügt.

Erfindungsgemäß umfasst die Mobileinheit ferner einen Beschleunigungs- und/oder Lagesensor, und insbesondere einen MEMS-basierten Sensor und/oder Barometer-Sensor. Entsprechend kann das Verfahren ein Einbinden eines Signals des Beschleunigungs- und/oder Lagesensors, und insbesondere des MEMS-basierten Sensors und/oder Barometer-Sensors, in die Steuerung zur Fertigung des Endprodukts umfassen, wobei ein Bewegungs- oder Orientierungssignal für die Zuordnung der Mobileinheit zu dem mindestens einen Werkstück verwendet wird. Signale werden dabei durch Schütteln der Mobileinheit und/oder spezifische Lagen der Mobileinheit und/oder durch Vornehmen von spezifizierten Gesten mit der Mobileinheit erzeugt. Das Verfahren kann ferner ein Auswerten von Bildinformation des mindestens einen Werkstücks und/oder der Mobileinheit umfassen, wobei die Bildinformation z. B. Kennzeichnungen wie Barcodes, Abbildungen etc. umfasst.

In einigen Ausführungsformen umfasst das Verfahren ein Zuordnen der Mobileinheit zu einem Bediener, einem Transportmittel, einer Werkzeugmaschine oder einem Werkzeug, ein Bestimmen der Position der einem Bediener, einem Transportmittel, einer Werkzeugmaschine oder einem Werkzeug zugeordneten Mobileinheit mit dem Innenraum-Ortungssystem und ein Einbinden der bestimmten Position in die Steuerung zur Fertigung eines Endprodukts der Industriefertigungsanlage und/oder in eine Bewegungsanalyse des Bedieners, des Transportmittels, der Werkzeugmaschine oder des Werkzeugs.

In einigen Ausführungsformen umfasst das Verfahren ein Definieren von Zonen und/oder räumlichen Schranken in der Fertigungshalle, insbesondere in einem Lageplan der Fertigungshalle, und ein Abgleichen der bestimmten Position hinsichtlich der Zonen und/oder der räumlichen Schranken und Steuern der Fertigung basierend auf dem Abgleich. Das Abgleichen der bestimmten Position kann ergeben, dass sich die Mobileinheit in einer Zone befindet oder diese verlassen hat oder dass die Mobileinheit eine räumliche Schranke passiert hat. Die Zonen und/oder die räumlichen Schranken können in zwei oder drei Dimensionen definiert werden.

Beispielsweise kann das Einbinden der bestimmten Position in die Steuerung zur Fertigung eines Endprodukts einen oder mehrere der folgenden Schritte umfassen:
- Abgeben von Signalen zur Unterstützung der Ortung;
- Anzeigen von Information zum Fertigungszustand, insbesondere auf einem mobilen Ausgabegerät wie einem Tablett, Smartphone oder einem Überwachungsmonitor;
- Einstellen von Betriebsparametern einer Werkzeugmaschine;
- Aktualisieren eines Protokolls, das die Fertigung, insbesondere Bearbeitungsschritte, protokolliert;
- Zuordnen der Mobileinheit zu einem Auftrag zur Fertigung eines oder mehrerer Endprodukte in mehreren unterschiedlichen Arbeitsschritten;

Ferner kann das Einbinden der bestimmten Position in die Steuerung zur Fertigung eines Endprodukts ein Steuern und/oder Überwachen
einer Bearbeitung des mindestens einen Werkstücks in mehreren unterschiedlichen Arbeitsschritten, die an unterschiedlichen Orten, insbesondere aber innerhalb der Fertigungshalle, durchgeführt werden;
eines Transports des mindestens einen Werkstücks zwischen unterschiedlichen Arbeitsschritten, die an unterschiedlichen Orten, insbesondere aber innerhalb der Fertigungshalle, durchgeführt werden;
einer Bearbeitung des mindestens einen Werkstücks an Arbeitsplätzen, die mit der Fertigungssteuerung vernetzt oder in diese integriert sind; und/oder
einer Bearbeitung des mindestens einen Werkstücks an Arbeitsplätzen, die mit der Fertigungssteuerung nicht vernetzt oder in diese nicht integriert sind,
umfassen.

Mehrere Werkstücke, insbesondere solche, die im Endzustand die gleiche Form aufweisen und die gleichen Prozessschritte durchlaufen haben, und besonders solche, die auch zu einem gemeinsamen Auftrag gehören, werden als Werkstücksammeleinheiten oder Werkstückverbund bezeichnet. Diese werden üblicherweise an einer Werkstücksammelstelleneinheit abgelegt. Es ist vorteilhaft, jeder Werkstücksammeleinheit eine Mobileinheit zuzuordnen, insbesondere sowohl physisch (indem die Mobileinheit in der Nähe einer Werkstücksammelstelleneinheit z. B. auf die Werkstücksammelstelleneinheit platziert wird) als auch organisatorisch (indem ein Mobileinheitsdatensatz einem Bearbeitungsplan im Fertigungssteuerungssystem digital zugeordnet werden). Im Fertigungssteuerungssystem kann eine Liste aller Aufträge (inklusive Bearbeitungsplänen) abgelegt sein. Jeder der Aufträge kann einer Werkstücksammeleinheit zugeordnet werden. Wenn zusätzlich eine Zuordnung der Aufträge zu je einer Mobileinheit erfolgt, dann ist jeder Auftrag in der Fertigungshalle jederzeit lokalisierbar. Dies kann ferner mit rückgemeldeten Informationen von Arbeitsplätzen und/oder Maschinen im Fertigungssteuerungssystem kombiniert werden.

Die Innenraum-Ortung und das Innenraum-Ortungssystem zeichnen sich dabei dadurch aus, dass die Positionsbestimmung der Mobileinheiten allein durch die Analyseeinheit, also ohne manuelle Interaktion, erfolgen kann. Bisherige Systeme zur Ortung von Werkstücken oder Aufträgen in Fertigungsstätten haben den Nachteil, dass verloren gegangene Werkstücke oder Aufträge manuell gesucht werden müssen. Man hat erkannt, dass diese manuellen Suchvorgänge, insbesondere in Fertigungsstätten mit einer hohen Anzahl von kleinen und ständig wechselnden Aufträgen, also z.B. in Lohnfertigungsstätten, einen enorm hohen Anteil der nichtproduktiven Zeit ausmachen. Mit der erfindungsgemäßen Ortung und dem beschriebenen System können die Positionen der Werkstücke und damit der Aufträge z. B. auf einem Bildschirm aufgerufen, gefiltert oder gezielt lokalisiert werden. Die Notwendigkeit von zeitaufwändigen manuellen Suchvorgängen von Werkstücken, aber auch von Werkzeugen oder Personen, kann so insbesondere in der (stahl- und/oder blechverarbeitenden) industriellen Fertigung drastisch verringert werden.

Weitere Vorteile von hierin offenbarten Aspekten betreffen die erleichterte Einbindung einer Innenraum-Ortung in Fertigungsprozesse.

In einigen Ausführungsformen wird die Bearbeitung des oder der Werkstücke an Arbeitsplätzen gesteuert oder überwacht, die mit der Fertigungssteuerung vernetzt oder in diese integriert sind. Derartige Maschinenarbeitsplätze umfassen Maschinen, die Fertigungsanweisungen per Datenverbindung, insbesondere digital, übermittelt bekommen und durchführen. Dabei kann kein oder nur ein minimaler Eingriff durch den Bediener erfolgen. Solche Maschinen werden üblicherweise als automatisierte oder vollautomatisierte Maschinen bezeichnet. Derartige Maschinen können auch den Status der Fertigung an eine Fertigungssteuerung melden.

In einigen Ausführungsformen wird die Bearbeitung des oder der Werkstücke an Arbeitsplätzen, die mit der Fertigungssteuerung nur zu einem sehr geringen Grad oder gar nicht vernetzt oder in diese nicht integriert sind, gesteuert und/oder kontrolliert. Das können Arbeitsplätze sein, bei denen die Arbeitsschritte manuell von Menschenhand durchgeführt werden oder solche, die wohl Maschinen aufweisen, die aber nur zu einem sehr geringen Grad oder gar nicht vernetzt sind oder sich auch nur sehr aufwändig vernetzen lassen, z. B. sogenannte Handarbeitsplätze, wie sie in DE 10 2016 220 015 A1, "Handarbeitsplatzeinheit, Arbeits-Datenverarbeitungsvorrichtung, Handarbeitsplatzbetreibungssystem, Handarbeitsplatzbetriebsverfahren und Handarbeitsplatzbereitstellungsverfahren" mit Anmeldetag 13. Oktober 2016 beschrieben sind. Auch diese genannte deutsche Patentanmeldung wird hierin vollumfänglich aufgenommen.

Arbeitsplätze, die nur zu einem sehr geringen Grad vernetzt sind, können beispielsweise Handarbeitsplätze mit einfachen Maschinen sein, wie Arbeitsplätze zum Bohren, Sägen, Fräsen und Biegen. Ihre einzige Vernetzung kann in einem Überwachungssystem bestehen, wie es in der DE 10 2016 220 015 A1 beschrieben ist. Eine weitere Vernetzungsmöglichkeit ist die Überwachung der Leistungsaufnahme solcher Maschinen und die Vernetzung der Informationen aus der Leistungsaufnahme. So kann, wenn eine Maschine gar keine Leistung verbraucht hat, z. B. gefolgert werden, dass die Maschine den Auftrag noch nicht abgearbeitet haben kann.

Insbesondere die Kombination aus Fertigungsprozessen mit Arbeitsplätzen, die mit der Fertigungssteuerung vernetzt oder in diese integriert sind und solchen, die es nicht oder nur zu einem sehr geringen Grad sind, stellt heute noch einen wichtigen Hinderungsgrund für die effektive und effiziente Fertigungssteuerung dar, weil Aufträge nach wie vor auf Papier ausgedruckt werden, wenn sie von einem automatisierten Arbeitsplatz zu einem nicht automatisierten Arbeitsplatz kommen. Das verlangsamt die Fertigung. Das erschwert auch die Flexibilität, wenn beispielsweise ein besonders schnell zu bearbeitender Auftrag mit mehreren Prozessschritten an mehreren Arbeitsplätzen innerhalb kurzer Zeit abgearbeitet werden soll. Ein Fertigungsbetrieb, der dies reibungslos sicherstellen kann, hat gegenüber seinen Wettbewerbern, die das nicht können, Vorteile. Mit der Ortung der Werkstücke und der Verknüpfung der Ortung mit der Fertigungssteuerung können die hierin offenbarten Konzepte eine flexible und schnelle Fertigung von Endprodukten ermöglichen.

Basierend auf den hierin offenbarten Konzepten können intelligente Assistenzsysteme in Fertigungshallen eine 2D- oder 3D-Positionsbestimmung von Werkstücken (allgemein Material) und optional Personen, (z. B. Bearbeitern), Transportmedien, Maschinen, Werkzeugen und vielem mehr zur Unterstützung von Fertigungsprozessen nutzen. Dadurch wird es möglich, 2D- oder 3D-Positionen als Information, die zusätzlich zu weiteren Sensorinformationen vorliegt und gemäß den hierin offenbarten Konzepten bestimmt wurde, im Rahmen einer gesamtheitlichen Fertigungssteuerung und Digitalisierung von Fabriken zu verwenden.

Die hierin offenbarten Konzepte basieren auf der Verwendung eines 2D-/3D-Innenraum (indoor)-Ortungssystems als Ausgangsbasis für die ortsabhängige Informationsverarbeitung. Das Ortungssystem kann optional mit weiterer Sensorik, zum Beispiel mit Beschleunigungs- und/oder Lagesensoren, ausgestattet sein und so ferner als Ausgangsbasis für eine lageabhängige Informationsverarbeitung dienen. Dadurch wird insbesondere eine orts- (und gegebenenfalls lage-) abhängige Interaktion im Rahmen des 2D-/3D-Innenraum-Ortungssystems bei der Fertigungssteuerung sowie eine Optimierung von Fertigungsvorgängen möglich. Beispielsweise können virtuelle Schranken (Gates) und Zonen eingesetzt werden, um einen Fertigungsprozess und nachfolgende Produktionsschritte automatisiert zu überwachen und zu steuern. Dies kann insbesondere in Echtzeit erfolgen.

Es wurde erkannt, dass der Einsatz derartiger Ortungssysteme bei Berücksichtigung der zu erwartenden Prozessvorgänge in einer Fertigungshalle auch im speziellen Umfeld einer stahl- und/oder blechverarbeitenden Industriefertigung möglich ist. Entsprechend können derartige Ortungssysteme in ein Fertigungssteuerungssystem (hierin auch als MES (Manufacturing Execution System) bezeichnet) integriert werden. Durch die Berücksichtigung der zu erwartenden Prozessvorgänge in einer Fertigungshalle wird der Einsatz derartiger Ortungssysteme z. B. trotz des vorhandenen Stahls und Blechs möglich, obwohl metallische Werkstücke die verwendeten elektromagnetischen Signale reflektieren und abschirmen können. Der Einsatz ist auch dann noch möglich, wenn die metallischen Werkstücke überdies noch örtlich bewegt werden und sich so die Reflexionsflächen ständig in ihrer Position und Ausrichtung ändern.

Bezugnehmend auf die eingangs erwähnte Verbuchung von physischem Materialfluss und Bearbeitungsschritten entsteht beim Einsatz von 2D-/3D-Innenraum-Ortungssystemen eine Komplexität bei der aufwandsarmen, dynamischen Zuordnung von gewonnener Ortsinformation zu physischen Komponenten. Die hierin offenbarten Konzepte adressieren diese Komplexität und erlauben es beispielsweise, Produktionsaufträge mit zugeordneter Kennung ohne aufwändige Interaktion einer Mobileinheit, mit der zuzuordnende Ortsinformation gewonnen wird, zuzuordnen.

Innenraum-Ortungssysteme erlauben die detaillierte Abbildung von Materialflüssen in der Fertigung innerhalb einer Fertigungshalle in die digitale Prozessverarbeitung. Die Ortungssysteme vereinfachen dabei die Lokalisierung der an der Fertigung teilnehmenden Objekte/Personen im Produktionsumfeld. Werden Werkzeuge, Betriebsmittel oder Ladungsträger initial einmal mit einer Mobileinheit des Ortungssystems ausgestattet, sind diese im digitalen Steuerungssystem manuell oder automatisiert entsprechend digitaler Information zuzuordnen. Dies bezieht sich auch auf temporär an der Fertigung beteiligte Objekte wie beispielsweise Produktionsaufträge oder Servicepersonal. Temporär benötigte dynamische Zuordnungen können immer wieder neu entstehen und werden nur wenige Stunden, Tage oder Wochen in der Fertigungshalle benötigt. Um die dynamische Zuordnung der Mobileinheiten zu neuen Produktionsaufträgen aufwandsarm und zuverlässig zu ermöglichen und sicherzustellen, können die hierin vorgeschlagenen Prozesshilfen verwendet werden.

Dies betrifft insbesondere den Einsatz von optischen Sensoren für die einfache Zuordnung von beispielsweise Produktionsaufträgen zu Mobileinheiten des Ortungssystems. Dabei wird eine enge Verzahnung von Zuordnungsprozess und Fertigungsprozess möglich, die die Prozesssicherheit insbesondere auch in einem noch vorwiegend manuellen Umfeld der Fertigung sicherstellt.

Die hierin offenbarten Ausführungsformen der Integration einer derartigen Innenraum-Ortungstechnologie in die Prozesse der Blechfertigung können u. a. folgende Verfahrensschritte, Verwendungen und Vorteile aufweisen:
- Abbildung der wechselnden Zuordnung von Aufträgen,
- Abbildung einer Assistenz für eine Person, z. B. Bearbeiter, mit Hilfe des Ortungssystems und weiterer Sensorik, insbesondere bei der Lokalisierung von Werkstücken und Werkzeugen,
- Gewährleisten einer prozesssicheren und aufwandsarmen Fertigung durch automatisierte Abläufe mit geringen Freiheitsgraden für den Bearbeiter,
- Intuitiver Fertigungsablauf ohne aufwändige Informationsbeschaffung für den Bearbeiter.

Die Innenraum-Positionsbestimmung kann mit den hierin offenbarten Verfahren auf unter 30 cm, insbesondere unter 10 cm, Genauigkeit in einer von GPS-Satellitensignalen nicht erreichbaren Fertigungshalle mit einem Grundriss im Bereich von z. B. 1 ha erfolgen. Diese Genauigkeit ist mit anderen Techniken (Bluetooth, WiFi, WLAN, Infrarot, Mobilfunk, RFID) im Wesentlichen nicht möglich. Bei der Ortung von Werkstücken, Aufträgen, Personen (z. B. Bearbeitern) und/oder Werkzeug sind viele Anforderungen zu berücksichtigen. Offensichtlich richtet sich die industrielle Fertigung mehr und mehr auf Fertigung von Kleinserien mit vielen einzelnen Arbeitsschritten (Fertigungsprozesse wie z.B. Schneiden, Biegen, Schleifen, Oberflächenbehandlung) an unterschiedlichen Arbeitsplätzen wie Maschinenarbeitsplätze und manuelle Arbeitsplätze ein. So sind oftmals mehrere hundert unterschiedliche Aufträge an einem Tag zu erledigen, die alle unterschiedliche Arbeitsschritte erfordern.

Sobald nur eine Störung auftritt, kann die Fertigungssteuerung sehr schnell sehr unübersichtlich werden. Zeitaufwändig werden halb oder noch gar nicht bearbeitete Aufträge in der Fertigungshalle durch einzelne Personen gesucht und deren Status ermittelt. Dieser wird dann an die Fertigungssteuerung übermittelt. Das kann zu einem erheblichen Zeitverlust bei der eigentlichen Fertigung führen.

Durch die immer schneller werdenden Verarbeitungsschritte bei der produktiven Bearbeitung und bei der Erhöhung der Anzahl unterschiedlicher Aufträge mit immer kleinerer Anzahl von Gleichteilen, können derartige Ausfälle immer häufiger auftreten. Die dadurch verursachten Zeitausfälle reduzieren die produktive Zeit. Sollen Aufträge, Werkstücke, Personen, z. B. Bearbeiter, und Werkzeuge schnell aufgefunden werden, ist die hierin offenbarte Ortung zumindest einzelner dieser Einheiten hilfreich, Fehlzeiten zu reduzieren. Insbesondere erfüllt sie die sehr hohen Anforderungen für eine Industriefertigung.

Bei der Industriefertigung ist eine Ortung in Echtzeit angestrebt. Sie soll örtlich so genau sein, dass Mobileinheiten sicher gefunden und/oder den Bearbeitungsschritten zugeordnet werden können. Dazu hat sich herausgestellt, dass eine Ortung, die nur auf 1 m genau ist, nicht ausreicht. Auch ist eine Ortung, die bei jeder Veränderung des Abstrahlungsverhaltens elektromagnetischer Wellen, verursacht z. B. durch Bewegung von metallischen Werkstücken in der Fertigungshalle, neu kalibriert werden müsste, nachteilig und oft nicht einsetzbar. Die Ortung soll zudem flexibel sein, mehrere Aufträge sollten zu einem Auftrag zusammenfassbar sein, ein Auftrag sollte aufteilbar in mehrere Aufträge sein etc. Die Ortung sollte einfach zu bedienen sein. Sie sollte ausfallsicher sein.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z. T. erhebliche Zeiteinsparung im Fertigungsprozess bewirken, wobei sich der Fertigungsprozess z. B. von der Herstellung einer erforderlichen Stückzahl von Teilen bis zur korrekten Weitergabe an einen Nachfolgeprozess (z. B. einen nachfolgenden Metallbearbeitungsschritt) erstreckt. Mehrere Aufträge können ferner quasi gleichzeitig prozesssicher umgesetzt werden. Die hierin offenbarten Konzepte erlauben ferner eine einfache Zuordnung von Werkstücken im Rahmen des Ortungssystems. So können offene Aufträge trotz der Komplexität von mehreren gleichzeitig zu bearbeitenden Aufträgen optimiert werden.

Ferner kann eine flexible Abarbeitung verschiedener Prozessabläufe mit der begleitenden Zeiteinsparung erfolgen, wenn Maschinen wie Laserschneidmaschinen und/oder Stanzmaschinen in den teilautomatisierten Herstellungsprozess eingebunden werden. Ferner kann die Fehlervermeidung und die automatische, korrekte Verbuchung von Werkstücken, Bearbeitungsschritten etc. die Basis für eine datenbasierte Echtzeitsteuerung der Metallverarbeitung (z. B. der Stahl- und Blechfertigung) legen. Entsprechend werden auch Werkzeugmaschinen, die bei der Erstellung von kleinen Losgrößen von Werkstücken eingesetzt werden, in eine von einem MES im Rahmen der Industrie 4.0 gesteuerte Fertigung einbindbar.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine beispielhafte schematische Darstellung eines Fertigungssteuerungssystems mit einem Innenraum-Ortungssystem,
- Fig. 2: eine Darstellung einer beispielhaften Ausführungsform einer UWB-basierten Mobileinheit,
- Fig. 3: eine Darstellung einer weiteren beispielhaften Mobileinheit auf einem Transportwagen für Werkstücke,
- Fig. 4: einen beispielhaften digitalen Lageplan einer Fertigungshalle,
- Fig. 5: einen weiteren beispielhaften digitalen Lageplan,
- Fig. 6: eine beispielhafte Darstellung einer Werkzeugmaschine, die in ein Innenraum-Ortungssystem eingebunden ist und
- Fig. 7: ein Flussdiagramm zur Verdeutlichung einer mit einem Innenraum-Ortungssystem unterstützten Fertigung und
- Fig. 8: ein Flussdiagramm zur Verdeutlichung von Verfahrensschritten zur industriellen Fertigung eines Endprodukts.

Hierin beschriebene Aspekte basieren zum Teil auf der Erkenntnis, dass mit der Genauigkeit und der Zuverlässigkeit neuer insbesondere auf der UWB-Technologie basierender Ortungssysteme, beispielsweise mit einer Genauigkeit in der Ortsbestimmung von kleiner 30 cm, insbesondere kleiner 10 cm, der Einsatz von Innenraum-Ortungssystemen im Rahmen der industriellen Fertigung sinnvoll möglich wird.

Die hierin offenbarten, für die Integration in die industrielle Fertigung vorgesehenen Ortungssysteme basieren auf Mobileinheiten (hierin auch als "Tags" bezeichnet) und stationären Sende-Empfangseinrichtungen (hierin auch als "Anker" oder "Anchors" bezeichnet). Bei der Integration in die industrielle Fertigung wird zur Positionsbestimmung eines Werkstücks, allgemein eines Gegenstands ("Assets"), dieses jeweils mit mindestens einer Mobileinheit versehen bzw. mit dieser funktionell oder räumlich in Bezug gesetzt (hierin auch als physische oder räumliche Zuordnung bezeichnet). Die Mobileinheiten sind allgemein elektronische Bauteile, die dazu in der Lage sind, mit den Sende-Empfangseinrichtungen, insbesondere mittels UWB-Kommunikationstechnologie, zu kommunizieren. Jede Mobileinheit kann zur Feststellung von Laufzeiten über eine eigene Zeitbestimmungseinheit ("Clock") verfügen.

Eine räumliche Zuordnung kann dadurch durchgeführt werden, dass eine Mobileinheit nahe eines zugeordneten Werkstücks oder am Werkstück selbst positioniert wird oder das Werkstück auf einer Werkstücksammelstelleneinheit, an der eine Mobileinheit vorgesehen ist, beispielsweise ein Transportwagen, ein Sammelbehälter oder eine Palette abgelegt wird. Die Mobileinheit kann dort (oder auch an einer Person) fest angebracht sein oder an dem Werkstück/der Werkstücksammelstelleneinheit anheftbar oder auf ihr abgelegt werden. Für ein Anheften kann die Mobileinheit z. B. über einen Haltemechanismus verfügen, beispielsweise ein Magnet oder eine Klemm-, Schraub-, Klipp-, Bajonett- oder Saugvorrichtung, mit dem sie an dem Werkstück oder an der Werkstücksammelstelleneinheit derart verbunden werden kann, dass sie sich nicht unkontrolliert von dieser lösen kann.

Neben der vorzunehmenden räumlichen Zuordnung eines z. B. Werkstücks zur Mobileinheit kann ferner eine Zuordnung der Mobileinheit (und damit des räumlich zugeordneten Werkstücks) zu dem zugehörigen Produktionsauftrag des Werkstücks vorgenommen werden (hierin auch als digitale Zuordnung des Fertigungsprozesses oder kurz Bearbeitungsplan-Zuordnung bezeichnet).

Voll- oder teilautomatisierte Bearbeitungsplan-Zuordnungen verbinden beispielsweise einen Produktionsauftrag mit einer spezifischen Mobileinheit des Ortungssystems. Sie können beispielsweise durch einen kombinierten Einsatz eines Assistenzsystems im Umfeld des Bedieners und des Ortungssystems durchgeführt werden.

Ein Beispiel eines Assistenzsystems ist ein optisches Assistenzsystem, bei dem mit optischen Sensoren vom Bediener ergriffene Werkstücke oder Werkzeuge erkannt und im Kontext der zur Verfügung stehenden Produktionsdaten aus den Produktionsaufträgen (bevorzugt) eindeutig für die Bearbeitungsplan-Zuordnung identifiziert werden. Ein beispielhaftes Assistenzsystem ist in der eingangs aufgeführten DE 10 2016 120 131 A1 offenbart. Derartige Assistenzsysteme können ferner für die räumliche Zuordnung eingesetzt werden, wenn beispielsweise Bilddaten das Werkstück und die Mobileinheiten betreffen. Des Weiteren kann ein oder mehrere an der Mobileinheit vorgesehene Sensoren für die Bearbeitungsplan-Zuordnung, aber auch für die räumliche Zuordnung eingesetzt werden, wie nachfolgend im Zusammenhang mit Ausführungsformen der Mobileinheit erläutert wird.

Die räumliche Zuordnung kann dann die weitere Verfolgung des erkannten und zugeordneten Werkstücks über die lokalisierbare Mobileinheit während des nachfolgenden Fertigungsprozesses unterstützen. Nachfolgend und in Zusammenhang mit den nachfolgend beschriebenen Figuren werden verschiedene physische (räumliche) und digitale (Prozess-) Zuordnungen beispielhaft erläutert. Diese können einzeln oder in Kombination eingesetzt werden. Dabei stellt die enge Verzahnung des Prozessablaufs die Prozesssicherheit im manuellen Umfeld sicher.

Bei der digitalen Zuordnung können die Mobileinheiten mit Produktionsaufträgen verknüpft werden. Die Produktionsaufträge betreffen Bearbeitungsprozesse an verschiedenen Fertigungsstationen, beispielsweise an einer Laserschneidmaschine oder an einer Stanzmaschine sowie z. B. an einem Kommissionierplatz. Zur Verfolgung eines Produktionsauftrages kann nun eine Mobileinheit zur Verfügung stehen. Die digitale Zuordnung kann beispielsweise dadurch erfolgen, dass eine Mobileinheit in einer geometrisch definierten Zone positioniert wird. Bei Anwesenheit der Mobileinheit in der Zone wird diese mit einem der noch nicht zugeordneten Produktionsaufträge verknüpft. Dabei können Informationen zu diesem Auftrag eingangs auf die Mobileinheit geladen werden oder je nach Bedarf auf diese immer aktuell geladen werden.

Die digital zugeordneten Mobileinheiten können z. B. auf Werkstücksammelstellen wie Wagen oder Paletten, allgemein Ladungsträger, vom Bediener verteilt werden, auf denen während der Fertigung die Werkstücke eventuell Kamera-assistiert abgelegt werden (physische Zuordnung). Ebenso können Werkzeuge einer Mobileinheit digital zugeordnet werden. Im Rahmen einer Maschinen-basierten digitalen und/oder physischen Zuordnung können bei ausreichend automatisierten Fertigungsstationen die Mobileinheiten auch durch die im Produktionsprozess befindlichen Maschinen auf den Ladungsträgern positioniert werden.

Bei der physischen Zuordnung kann der Bediener oder eventuell eine entsprechend ansteuerbare Maschine die zuzuordnenden Werkstücke automatisiert auf dem Ladungsträger neben der evtl. bereits digital zugeordneten Mobileinheit ablegen. Die physische Zuordnung wird beispielsweise manuell mit einer Bestätigung direkt an der Mobileinheit oder über das MES abgeschlossen.

Ferner kann die physische Zuordnung durch ein den manuellen Handhabungsvorgang verfolgendes Assistenzsystem unterstützt werden. Nimmt ein Bearbeiter ein Werkstück oder Werkzeug auf, kann diese Aufnahme sensorisch durch das Assistenzsystem erfasst werden. Die Zuordnung durch das Assistenzsystem zu einer bereits digital zugeordneten Mobileinheit kann beispielsweise auf zwei Arten erfolgen. Zum einen kann der Bearbeiter visuell das reale Werkstück/Werkzeug einer schematischen Skizze zuordnen, die auf einer Anzeigeeinheit der Mobileinheit angezeigt wird. Zum anderen kann durch Registrierung des erfolgreichen Griffes eines Werkstücks/Werkzeugs die entsprechend zugeordnete Mobileinheit ein beispielsweise optisches oder akustisches Signal abgeben.

Alternativ zur vorausgehend durchgeführten digitalen Zuordnung kann das Assistenzsystem veranlassen, dass eine Mobileinheit, in dessen Nähe ein Werkstück/Werkzeug abgelegt wird, gemäß des vom Assistenzsystem erkannten Typs des Werkstücks/Werkzeugs digital zugeordnet wird.

Alternativ oder zusätzlich zum kamerabasierten Assistenzsystem kann die dynamische Zuordnung erfolgen, indem z. B. Auftragspapiere und/oder ein Code (z. B. Barcode, QR-Code etc.) der Mobileinheit gescannt werden. Ferner kann ein gemeinsames oder es können zwei separate Fotos mit dem Code der Auftragspapiere und dem Code der Mobileinheit ausgewertet werden. In einigen Zuordnungsverfahren kann dabei ein Foto der Auftragspapiere mit einer Kamera an der Mobileinheit (oder einer separaten Kamera des Bedieners) evtl. ergänzend zu einem optischen Assistenzsystem aufgenommen werden.

Alternativ oder zusätzlich zur Verarbeitung der Information auf Auftragspapieren kann die Sollgeometrie des Werkstücks herangezogen werden. Nach einem Abgleich der beispielsweise mit dem kamerabasierten Assistenzsystem oder der Kamera an der Mobileinheit erfassten Geometrie des Werkstücks mit der Sollgeometrie können dann Informationen aus dem zentralen Produktionsdatensystem nachgeladen und dem Bediener angezeigt werden. Falls die Bildverarbeitung keine eindeutige Identifikation zulässt, kann dem Bediener eine Teilmenge der aktiven Produktionsaufträge auflisten, welche für die erfasste Geometrie in Frage kommen. Der Bediener trifft dann die finale Auswahl und stellt die digitale Zuordnung her.

So lässt sich die Prozesssicherheit verbessern. Insbesondere ähnlich wirkende Werkstücke/Werkzeuge können eindeutig zugeordnet werden, ohne dass sie durch den Bearbeiter beispielsweise verwechselt, entsprechend falsch zugeordnet und fehlerhaft bearbeitet werden.

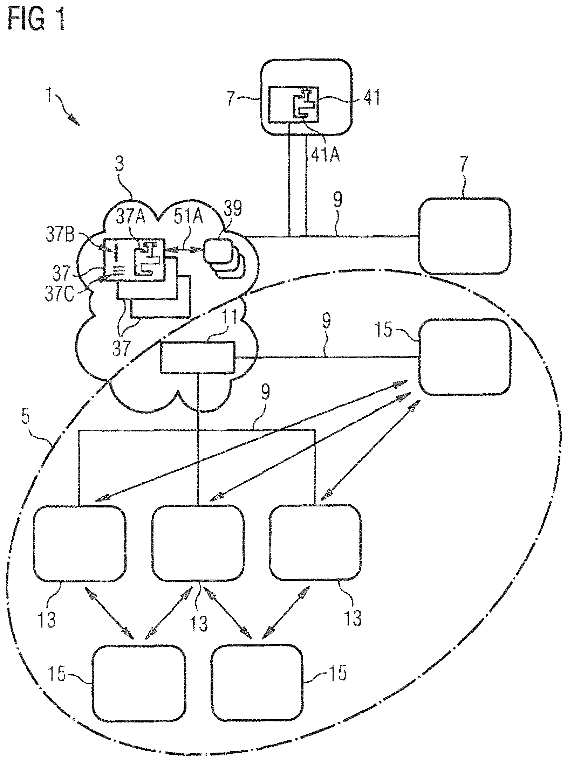

Fig. 1 zeigt schematisch ein Fertigungssteuerungssystem 1, das ein MES (Manufacturing Execution System) 3 und ein Innenraum-Ortungssystem 5 (hierin kurz Ortungssystem) umfasst.

Das MES 3 ist mit einer oder mehreren in einer Fertigungshalle positionierten Werkzeugmaschinen 7 über kabellose oder kabelgebundene Kommunikationsverbindungen 9 verbunden. Allgemein dient das MES 3 der Steuerung von Prozessabläufen/Fertigungsschritten bei der industriellen Fertigung von Werkstücken mit den Werkzeugmaschinen 7. Es dient damit insbesondere der Steuerung der Werkzeugmaschinen 7. Dazu empfängt das MES 3 Informationen über die Prozessabläufe/Fertigungsschritte sowie Statusinformation der Werkzeugmaschinen 7. Das MES 3 stellt ein Datenverarbeitungssystem oder allgemein ein Datenverarbeitungsverfahren dar, das in einer Datenverarbeitungsvorrichtung implementiert sein kann. Bei dieser kann es sich um eine einzelne elektronische Datenverarbeitungsvorrichtung (Server) oder um einen Verbund von mehreren Datenverarbeitungsvorrichtungen (Serververbund/Cloud) handeln. Die Datenverarbeitungsvorrichtung oder der Verbund kann örtlich in der Fertigungsstätte vorgesehen werden oder außerhalb dezentral aufgebaut werden.

Eine Plattform, auf der die Datenverarbeitungsvorrichtungen zur Verfügung stehen können - d. h., auf der das MES 3 implementiert werden kann, kann eine sogenannte Cloud sein. Die Cloud umfasst z. B. einen externen Server mit Rechen- und Speicherkapazität, den mehrere Produkthersteller gleichzeitig nutzen können. Dabei kann durch Zugangsauthentifizierungen, Passwörter etc. sicher gestellt werden, dass kein Hersteller auf die Daten eines anderen Herstellers oder des Betreibers der Fertigungsanlage zugreifen kann. Es kann sichergestellt werden, dass kein außenstehender Dritter auf die gespeicherten Daten zugreifen kann. Ein Schutz vor ungewolltem Zugriff kann dadurch gewährleistet werden, dass diejenigen Daten, die in der Cloud gespeichert sind, auch dort verarbeitet werden, und der Hersteller oder Betreiber der Fertigungsanlage, der die Daten nutzen möchte, seinerseits die Daten nur in der Cloud verarbeitet. Derartige Cloud-Nutzungen können zu einer bedeutenden Vereinfachung von Systemkonfigurationen und einer begleitenden Kostenersparnis führen.

Die Datenverarbeitungsvorrichtung kann eine Benutzer-Oberfläche (GUI = Graphical User Interface) mit verschiedenen Anwendungsprogrammen (APPs) aufweisen. Mit der Bereitstellung verschiedener APPs, die ein bestimmtes Anwendungsprogramm ausführen können, kann die Fertigungssoftware, die ein Unternehmen benötigt, segmentiert aufgebaut werden, sodass sie je nach Bedarf - wie bei Nutzung einer spezifischen APP - nur dann abgerufen werden muss, wenn sie benutzt werden soll. Dies ermöglicht, dass eine Nutzung an den Provider, der die Fertigungssoftware bereitstellt, je nach Bedarf vergütet werden kann.

Das Ortungssystem 5 kann mehrere Sende-Empfangseinheiten 13 und mindestens eine Mobileinheit 15 aufweisen. Das Ortungssystem 5 kann ferner mit dem MES 3 zusammenwirken. Beispielsweise kann eine Analyseeinheit 11 des Ortungssystems 5 als ein Teil des MES 3 ausgebildet sein.

Die Sende-Empfangseinheiten 13 können dazu eingerichtet sein, an die Mobileinheiten 15 UWB-Radiosignale zu senden und von diesen UWB-Radiosignale zu empfangen.

Der Abstand zwischen einer örtlich beweglichen Mobileinheit 15 und einer z. B. fest installierten Sende-Empfangseinheit 13, kann durch die Zeit bestimmt werden, die das Signal zum Überwinden der Distanz zwischen den beiden Einheiten benötigt. Werden die Distanzen von mehreren Sende-Empfangseinheiten 13 ermittelt, deren Ort jeweils bekannt ist, kann der räumliche Ort der Mobileinheit 15 in Bezug zu den Sende-Empfangseinheiten 13 z. B. durch Triangulation bestimmt werden.

Für eine Laufzeitbestimmung können die Sende-Empfangseinheit 13 und die Mobileinheit(en) 15 über hochgenaue Uhren verfügen, die die Zeit auf wenige oder sogar nur Bruchteile von ns genau bestimmen können. Auch wenn die Uhren in der Sende-Empfangseinheit 13 und in der Mobileinheit 15 hochgenau sind, so sind die Uhren noch nicht zwingend synchronisiert. Es können unterschiedliche Verfahren der Synchronisation von Uhren oder der Elimination von Fehlern folgend aus dem asynchronen Uhrenverlauf eingesetzt werden. So kann beispielsweise eine der Sende-Empfangseinheiten 13, z. B. als Master-Positionsbestimmungseinheit, ein Signal zu einer ersten Zeit T1 versenden und ein zweites Signal zu einer zweiten Zeit T2. Der Mobileinheit 15 kann der Zeitunterschied T2-T1 bekannt sein oder zusammen mit den Signalen übermittelt werden, so dass sie sich auf die Zeit der Sende-Empfangseinheiten 13 synchronisieren kann. Alternativ kann die Mobileinheit 15 zwei Signale in einem vorbekannten zeitlichen Abstand Ta senden. In diesem Fall kann die Sende-Empfangseinheit 13 anhand ihrer eigenen Zeitmessung mit ihrer eigenen Uhr vom Empfang des ersten Signals bis zum Empfang des zweiten Signals die Synchronisationsabweichung ermitteln und aus der Distanzmessung herausrechnen. Der zeitliche Abstand zwischen dem ersten Signal und dem zweiten Signal sollte gering sein, sodass sich die Mobileinheit in dieser Zeit nicht örtlich wesentlich bewegt hat. Der zeitliche Abstand kann von der Mobileinheit so gewählt werden, dass er ein vorgegebenes Vielfaches oder ein vorgegebener Bruchteil der Zeit ist, die die Mobileinheit benötigt vom Empfang eines Signals, auf das es antworten soll, bis zur Ausgabe des ersten Signals.

Die Sende-Empfangseinheiten 13 können ferner über kabellose oder kabelgebundene Kommunikationsverbindungen mit der Analyseeinheit 11 verbunden sein.

Die Mobileinheiten 15 können beispielsweise nur über die Sende-Empfangseinheiten 13 kommunizieren. Alternativ oder zusätzlich können sie eigenständig über weitere Kommunikationsverbindungen 9 (zum Beispiel eine WLAN-Verbindung) mit der Analyseeinheit 11/dem MES 3 kommunizieren.

Allgemein kann die Datenkommunikation der Sende-Empfangseinheiten 13 und der Mobileinheiten 15 mit dem Fertigungssteuerungssystem 1, insbesondere mit dem MES 3, bidirektional möglich sein.

In einigen Ausführungsformen können WLAN-Sendestationen in die Sende-Empfangseinheiten 13 des Ortungssystems 5 für einen Datenzugang in das Fertigungssteuerungssystem 1 integriert werden, sodass über die Sende-Empfangseinheiten 13 digitale Daten in der Fertigungshalle mobil z. B. über Smartphones oder Tablets zugänglich sind. Die Integration der WLAN- Sendestationen in die Sende-Empfangseinheiten 13 kann die Installation und das Betreiben eines Datenkommunikationssystems in der Fertigungshalle vereinfachen.

Die Analyseeinheit11 kann beispielsweise als eine zentrale Master-Positionsbestimmungseinheit (hierin auch als "Server" bezeichnet) dienen. Diese definiert beispielsweise einen Kommunikationsrahmen für die UWB-Kommunikation. Der Kommunikationsrahmen beinhaltet u. A. die Sendezeit des Rahmens/der UWB-Radiosignale. In einigen Ausführungsformen kann eine der Sende-Empfangseinheiten 13 als Master-Positionsbestimmungseinheit ausgebildet sein.

In einer beispielhaften Umsetzung der Innenraum-Ortung übermittelt die Master-Positionsbestimmungseinheit für eine Positionserfassung einer der Mobileinheiten 15 den Kommunikationsrahmen an die Sende-Empfangseinheiten 13. Dieser Kommunikationsrahmen wird für den Signalaustausch für die Ortung zwischen den Mobileinheiten 15 und den Sende-Empfangseinheiten genutzt. Die Position der stationären Sende-Empfangseinheiten 13 bezüglich der Master-Positionsbestimmungseinheit ist den Sende-Empfangseinheiten 13 beispielsweise durch eine Abfrage einer zentralen Datenbank bekannt, sodass den Sende-Empfangseinheiten 13 sowie der Analyseeinheit 11 der Zeitversatz zwischen Senden und Empfangen des UWB-Radiosignals über die Signallaufzeit bekannt ist.

Nach einem vorbestimmten Zeitintervall, z. B. 100 ms, übermittelt die Master-Positionsbestimmungseinheit einen zweiten Kommunikationsrahmen, der von den Sende-Empfangseinheiten 13 und den Mobileinheiten 15 empfangen wird. Durch Erfassung der Zeit vom Beginn des Empfangs des ersten Rahmens bis zum Beginn des Empfangs des zweiten Rahmens ist den Sende-Empfangseinheiten 13 und den Mobileinheiten 15 bekannt, was die Master-Positionsbestimmungseinheit z. B. genau unter 100 ms versteht. Die Mobileinheiten 15 und die Sende-Empfangseinheiten 13 können so die Frequenz ihrer Zeitbestimmungseinheiten mit der Master-Positionsbestimmungseinheit synchronisieren.

Nach unterschiedlichen, vorher konfigurierten Zeitintervallen (gemessen ab dem Empfang des zweiten Frames) senden die Mobileinheiten 15 ein Antwortframe. Beispielsweise sendet ein "Tag 1" nach 10 ms, ein "Tag 2" nach 20 ms, ein "Tag 3" nach 30 ms, etc. Diese Funkübertragung wird von den Sende-Empfangseinheiten 13 empfangen und der exakte Empfangszeitpunkt in Bezug auf den Sendebeginn des zweiten Frames der Master-Positionsbestimmungseinheit an die Analyseeinheit 11 übermittelt. Die Analyseeinheit 11 ermittelt dann z. B. über Trilaterationsverfahren die Position der Mobileinheiten 15 und gibt diese an das MES 3 weiter.

Eine Gruppe von Sende-Empfangseinheiten 13 kann einer Master-Positionsbestimmungseinheit zugeordnet werden und die Empfangszeiten können an diese übermittelt werden. Zur Erfassung von Positionen in großen Fertigungshallen oder über mehrere Gebäude oder Räume hinweg können mehrere Gruppen von Sende-Empfangseinheiten 13 vorgesehen werden, die jeweils einer eigenen Master-Positionsbestimmungseinheit zugeordnet sind. Diese Master-Positionsbestimmungseinheiten können wiederum untereinander kommunizieren. Je nach Position der Mobileinheiten 15 kann die Übermittlung der Empfangszeiten an unterschiedliche Master-Positionsbestimmungseinheiten (Server) und die Durchführung der Trilateration mit diesen unterschiedlichen Master-Positionsbestimmungseinheiten erfolgen.

Über die beispielhaft zuvor beschriebene Analyse von Laufzeiten und Trilateration kann das Innenraum-Ortungssystem 5 die Position einer oder mehrere Mobileinheiten 15 über die Sende-Empfangseinheiten 13 unter Verwendung der UWB-Technologie erfassen. Die UWB-Technologie nutzt Frequenzbereiche von z.B. 3 GHz bis 5 GHz, wobei die UWB-Technologie einen relativ großen Frequenzbereich zur Ausbildung von zeitlich scharf begrenzten Signalverläufen (Kommunikationsrahmen) nutzt. Um nämlich ein Objekt, das Radiowellen aussendet, möglichst exakt lokalisieren zu können, benötigt man ein Signal mit sehr steilen Flanken. D.h., das Signal stellt eher einen rechteckförmigen Signalverlauf über die Zeit dar als einen sinusförmigen Verlauf. Dazu benötigt man ein Signal, bei dem mehrere sinusförmige Signale mit unterschiedlichen Frequenzen überlagert sind. Denn aus mehreren Sinussignalen mit unterschiedlichen Frequenzen kann eine Signal geformt werden, das eine steile Flanke besitzt und einem im Wesentlichen rechteckförmigen Verlauf über die Zeit angenähert werden kann. Das bedeutet, dass mehrere Frequenzen aus einem breitbandigen Frequenzspektrum zur Verfügung stehen müssen, um ein Signal zu formen. Entsprechend eignet sich für die exakte Lokalisierung insbesondere die UWB-Technologie, die über ein breitbandiges Frequenzspektrum verfügt. Die Technologie und die verwendbaren Frequenzbänder der UWB-Technik sind beispielsweise in dem Standard "IEEE 802.15 -2015" beschrieben.

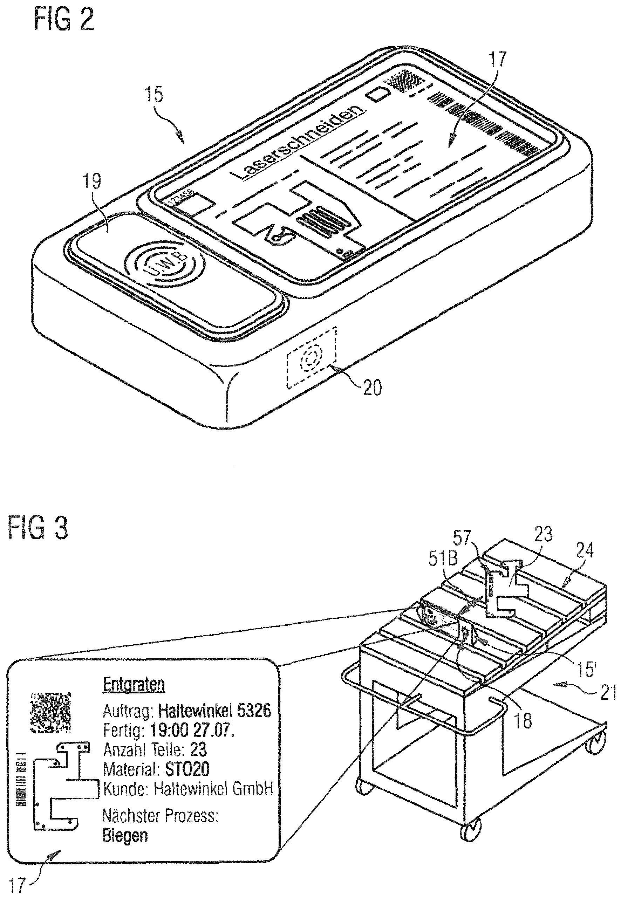

Fig. 2 zeigt beispielhaft eine Mobileinheit 15. Zur Interaktion eines Bedieners mit der Mobileinheit 15 kann diese eine elektronisch ansteuerbare Anzeige 17, beispielsweise ein E-Ink-Display (auch als elektronische Papier-Anzeige bezeichnet), und/oder eine oder mehrere Signalabgabevorrichtungen 18 (LEDs) zur Ausgabe von Informationen aufweisen.

Auf der Anzeige 17 können z. B. Informationen zum Auftrag, lesbar für Mensch und/oder Maschine, codiert und/oder in Schriftform und/oder als Figur dargestellt werden. Die Anzeige 17 kann auch als Signalabgabevorrichtung für eine Rückmeldung an den Benutzer genutzt werden, der die Mobileinheit 15 in einer der beschriebenen Arten bewegt (z. B. schüttelt) oder betätigt (z. B. eine Taste 19 drückt).

Ein weiteres Beispiel einer Signalabgabevorrichtung ist eine Vorrichtung zur Ausgabe von Schall, insbesondere im hörbaren Bereich, insbesondere zur Ausgabe von Sprachinformationen.

Allgemein kann die Mobileinheit 15 eine modulierbare Signalquelle zum Erzeugen von modulierten Licht-, Schall- oder Vibrationssignalen als Signalabgabevorrichtung aufweisen. Sie kann dann - ähnlich dem in der deutschen Gebrauchsmusterschrift DE 20 2016 106 352 U1 beschriebenen Kommunikationsgerät - als Daten sendendes Kommunikationsgerät zur drahtlosen Übertragung von Daten eingesetzt werden. Mithilfe eines derartigen insbesondere kameralosen Kommunikationsgeräts kann eine entsprechend ergänzte Mobileinheit im Zusammenspiel mit einer elektronischen Signalverarbeitungseinheit beispielsweise Zugangsdaten übertragen. Dabei kann das Kommunikationsgerät mindestens einen Sensor zum Empfangen von Licht-, Schall- oder Vibrationssignalen aufweisen und die Signalverarbeitungseinheit kann derart programmiert sein, dass sie aus empfangenen, modulierten Signalen die darin enthaltenen Daten zurückzugewinnt.

Des Weiteren kann in die Mobileinheit 15 mindestens eine Signaleingabevorrichtung (beispielhaft wird in Fig. 2 eine Taste 19 gezeigt) zur Eingabe von Parametern integriert werden.

Die Mobileinheit 15 kann ferner als Signaleingabevorrichtung einen einfachen Sensor zum Empfangen von Licht-, Schall- oder Vibrationssignalen insbesondere einen Helligkeitssensor aufweisen. Sie kann dann, wie beispielsweise in der zuvor erwähnten DE 20 2016 106 352 U1 beschrieben, als Daten empfangendes Kommunikationsgerät zur drahtlosen Übertragung von Daten, insbesondere von Zugangsdaten, von einer Werkzeugmaschine eingesetzt werden. Dazu weist die Werkzeugmaschine mindestens eine modulierbare Signalquelle zum Erzeugen von Licht-, Schall- oder Vibrationssignalen auf, die entsprechend den zu übertragenden Daten moduliert wurden. In einigen Ausführungsformen können z. B. solche Vorrichtungen der Werkzeugmaschine genutzt werden, die die Werkzeugmaschine zur Bearbeitung der Werkstücke ohnehin aufweist und die die Möglichkeit bieten, Schall, Vibrationen oder modulierte Lichtschwankungen zu erzeugen, mit denen Daten zur Mobileinheit 15 übertragen werden können.

In einigen Ausführungsformen kann die Mobileinheit 15 einen Sender und/oder Empfänger für Datenübertragung mittels elektromagnetischer Induktion aufweisen und dafür ausgelegt sein, eine Datenverarbeitung gemäß eines vordefinierten Protokolls durchzuführen (z. B. mittels RFID, NFC: near field communication). Dies ist mit besonders kostengünstigen Hardwarekomponenten erreichbar, die überdies stromsparend ausgebildet werden können. Allgemein ist die Nahfeldkommunikation mittels NFC oder RFID eine robuste, schnelle und drahtlose Kommunikation im Nahfeld.

Die automatisierte bzw. assistierte Zuordnung kann durch in der Mobileinheit vorgesehene weitere Sensoren intuitiv und prozesssicher gemacht werden. Die nachfolgend beschriebenen beispielhaften Sensoren lassen sich jedoch auch in anderem Kontext der Fertigung gewinnbringend einsetzen.

Beispielsweise können Gyroskope, Beschleunigungssensoren, Lagesensoren, Vibrationssensoren und/oder Magnetsensoren für das Erdmagnetfeld vorgesehen werden. Andere MEMS (micro-electro-mechanical system)-basierte Sensoren sind ebenfalls zusätzlich oder alternativ integrierbar.

Derartige Sensoren können durch Sensorfusion mit den Positionsdaten des Ortungssystems eine robustere und genauere Positionsbestimmung bewirken. Außerdem kann ein Sensor (oder auch mehrere zusammen) die Grundlage für eine Interaktion mit einer Person, z. B. einem Bearbeiter bilden, der beispielsweise Gesten ("in die Luft schreiben") oder gezielte Erschütterungen hervorruft. Dies kann ortsabhängig kontextbezogen erfolgen. Eine bestimmte Geste in einer ersten Zone kann dann eine andere Aktion auslösen als in einer anderen Zone.

Die Auswertung der Sensoren der Mobileinheit ist insbesondere dann besonders zielgerichtet und aussagekräftig, wenn sie in den Kontext des Produktionsumfelds gesetzt werden. Im Lagerbereich werden Teilmengen gebildet, beim Schweißen, Montieren, Fügen: mehrere Sensoren zusammengeführt. Sie können ferner zur Qualitätsprüfung und der Kennzeichnung von Ausschuss genutzt werden.

So können Vibrationssensoren zur Identifikation einer Interaktion mit dem Bediener und zur Identifikation von Erschütterungsprofilen (Dokumentation der Produktionsumgebung für spezifische Bauteile) zur Optimierung der Produktionsumgebung eingesetzt werden. Auch können sie zur Detektion von Erdbeben herangezogen werden.

Die Mobileinheit 15 kann ferner eine Kamera 20 aufweisen, die dazu ausgelegt ist, Bilder von Werkstücken und/oder von Codes (z. B. Barcodes oder QR-Codes) auf den Werkstücken oder auf anderen Dokumenten, Werkzeugen oder Produkten aufnehmen zu können. Auf diese Weise kann eine Zuordnung von Werkstücken und/oder Aufträgen zu der Mobileinheit 15 erfolgen. Zusätzlich kann die Mobileinheit eine Funktionalität zur Ermittlung, Verarbeitung und Übermittlung der Kamera-Daten aufweisen.

In einigen Ausführungsformen kann die Mobileinheit 15 einen Sensor (Wiegezelle) zum Ermitteln eines Gewichts eines Werkstücks und/oder einer Werkstücksammelstelle und/oder eines Füllstands einer Werkstücksammelstelle aufweisen. Zusätzlich kann sie eine Funktionalität zur Verarbeitung und Übermittlung von den entsprechend ermittelten Daten aufweisen. Ferner kann der Füllstand einer Werkstücksammelstelle z. B. mittels magnetischer Induktion, elektrischer Kapazität, mittels Ultraschall oder kamerabasiert oder einer Kombination von diesen Technologien überwacht werden.

Die Mobileinheit 15 kann ferner einen Sensor zum Ermitteln einer magnetischen Feldstärke aufweisen. Zusätzlich kann sie eine Funktionalität zur Verarbeitung und Übermittlung von den so ermittelten Daten aufweisen. Ein derartiger Magnetfeldsensor kann dazu genutzt werden, eine magnetische Codierung auszulesen, die z. B. in einem Werkstück eingebracht ist. Allgemein können derartige Sensoren als Basis für eine eindeutige Identifikation von Blechbauteilen durch die spezifische Struktur von Metallen dienen. Ein Beispiel eines derartigen Sensors ist ein Hall-Sensor. Allgemein können derartige Sensoren für Wirbelstrommessungen aufgebaut sein. Entsprechende Verfahren zur Kodierung und zum Auslesen einer solchen Kodierung sind beispielsweise in DE 102 48 142 B3 oder in DE 43 06 209 A1 offenbart.

In einigen Ausführungsformen kann die Mobileinheit 15 einen Sensor und/oder Sender zum Empfang und/oder zur Übermittlung von Daten über eine Infrarot (IR)-Schnittstelle aufweisen. Zusätzlich kann sie eine Funktionalität zur Verarbeitung und Übermittlung von derartigen IR-Daten aufweisen. IR-Schnittstellen (IR-Diode, IR-LED, bluetooth low energy) als Kommunikationsschnittstellen sind kostengünstig und können sehr stromsparend eingesetzt werden.

Die Mobileinheit 15 kann ferner einen Temperatur-Sensor zusammen mit einer Funktionalität zur Ermittlung, Verarbeitung und Übermittlung von Temperatur-Daten aufweisen. Da der Fertigungssteuerung der Ort der Mobileinheit 15 bekannt ist, kann die Fertigungssteuerung mit den Temperatur-Daten zur Regulierung der Raumtemperatur in der Fertigungshalle eingesetzt werden. Die Fertigungssteuerung kann die Temperatur insbesondere in jedem Bereich der Fertigungshalle, in dem sich eine Mobileinheit mit einem Temperatursensor befindet, erfassen und z. B. grafisch darstellen oder auf Fehlerzustände hin auswerten. So können z. B. eine ungewöhnliche Kälteentwicklung bei offenen Türen erkannt oder Alarm bei ungewöhnlicher Hitzeentwicklung gegeben werden. Ähnlich können die Mobileinheiten ein dezentrales Netz von Feuchtigkeitssensoren zur Regelung der Feuchtigkeit in der Fertigungshalle und/oder von Helligkeitssensoren zur Regelung der Ausleuchtung der Fertigungshalle ausbilden. Neben der Verwendung der Mobileinheit als Sensor für die Gebäuderegelung können derartige Temperatursensoren und Feuchtigkeitssensoren eine Dokumentation über die Fertigungsbedingungen für ein spezifisches Werkstück oder allgemein für den Betrieb der Fertigungsanlage ermöglichen.

In einigen Ausführungsformen kann die Mobileinheit 15 zusätzlich einen GPS-Sensor zusammen mit einer Funktionalität zur Ermittlung, Verarbeitung und/oder Übermittlung von GPS-Daten aufweisen.

Die Mobileinheit 15 kann ferner einen Gas-Sensor, insbesondere einen Rauchmelder, zusammen mit einer Funktionalität zur Ermittlung, Verarbeitung und/oder Übermittlung von Daten zu Gasanalyse aufweisen. So bilden die Mobileinheiten als Rauchmelder ein dezentrales Frühwarnsystem im Brandfall oder im Fall eines Defektes einer Maschine.

In einigen Ausführungsformen kann die Mobileinheit 15 einen Sensor zur Erkennung von biologischen Daten, insbesondere von personenspezifischen Daten wie Fingerabdrücke oder Gesichtserkennungsdaten aufweisen. Die Mobileinheit 15 oder die Fertigungssteuerung kann so individuelle Personen erkennen. Dies erlaubt es, z. B. die Anzeige der Mobileinheit 15 auf eine der Person zugewiesenen Sprache (beispielsweise die Muttersprache der Person) einzustellen. Ferner können bestimmte Informationen nur bestimmten Personen ausgegeben werden, beispielsweise in Abhängigkeit eines der Person zugewiesenen Tätigkeitsprofils.

Die Mobileinheit 15 kann ferner einen Sensor zur Erkennung von Vitalfunktionen einer Person, z. B. eines Bearbeiters, in der Nähe aufweisen. Z. B. können so Daten hinsichtlich Puls/Herzschlag, Muskelkontraktion/-dehnung, Blutdruck erfasst werden. Die Daten erlauben ein Überwachung des körperlichen Zustands der Person und können Rückschlüsse auf seine Aktivität geben. Die Mobileinheit 15 hat entsprechend die Funktionalität zur Ermittlung, Verarbeitung und/oder Übermittlung von so erkannten Daten. Entsprechend kann die Mobileinheit, die von einer Person getragen wird, deren Zustand überwachen.

In einigen Ausführungsformen kann die Mobileinheit 15 einen Sensor zur Erkennung von Audio-Signalen zusammen mit der Funktionalität zur Ermittlung, Verarbeitung und/oder Übermittlung von so erkannten Daten aufweisen. So kann die Mobileinheit mittels Spracheingabe gesteuert werden, Audio-Daten aufnehmen, speichern, auswerten und an andere Mobileinheiten weiterleiten

Die zuvor beschriebenen Sensoren und Funktionen auf der Mobileinheit 15 können beispielsweise durch die Fertigungssteuerung aktiviert oder deaktiviert werden. Die Aktivierung einzelner Funktionalitäten kann als eine Option vom Betreiber oder Inverkehrbringer des Fertigungssteuerungssystems in Form eines speziellen Lizensierungsverfahrens zeitlich gesteuert werden. Wünscht z. B. ein Fertigungsstättenbetreiber bestimmt Funktionen nur für eine bestimmte Zeit, z. B. die Temperaturüberwachung nur wenn seine Fertigungshalle nicht in Betrieb ist, so kann er sich gemäß dem Lizensierungsverfahren diese Funktionalität für eine von ihm vorgegebene Zeitspanne freischalten lassen. Das kann z. B. durch das Lizensierungsverfahren günstiger für ihn sein, als wenn er die Funktionalität ununterbrochen benutzt. Für den Betreiber oder Inverkehrbringer des Fertigungssteuerungssystems kann dies den zusätzlichen Nutzen haben, dass er die tatsächlich genutzten Funktionalitäten seiner Kunden besser kennenlernt.

Üblicherweise wird die Elektronik der Mobileinheit 15 mit einer Batterie oder einem Akku betrieben. Ein Akku kann durch nach außen geführte Kontakte oder kontaktlos, z. B. induktiv geladen werden. Beides kann so erfolgen, dass die Mobileinheit 15 zum Schutz vor Feuchtigkeit und Umwelteinflüssen ein dicht umschließendes Gehäuse aufweist. Die Mobileinheit 15 kann ferner eine Vorrichtung zum Laden der Akkus aufweisen, die Energie aus Umwelteinflüssen gewinnt, z. B. dem sogenannten "energy harvesting" aus Temperaturunterschieden zwischen Ober- und Unterseite, aus schnellen Bewegungen wie Vibrationen oder Stöße oder aus vorhandenen elektromagnetischen Wellen (z. B. Solar).

Damit die Batterie oder der Akku sparsam betrieben wird, kann die Mobileinheit 15 einen Stand-by-Modus einnehmen, in dem sie z. B. kein UWB-Signal mehr sendet und/oder den Empfang deaktiviert. In einigen Ausführungsformen kann sie den Stand-by-Modus selbständig verlassen. Beispielsweise kann sie so, wenn sie bewegt wurde, der Fertigungssteuerung einen neuen Ort übermitteln.

Allgemein können einzelne oder mehrere der beschriebenen Sensoren einzeln für sich oder in Kombination für derartige Steuerungsverfahren genutzt werden. Insbesondere sind die Sensoren zur Lage- und Beschleunigungsdetektion zur Ansteuerung derartiger Wechsel im Betriebsmodus geeignet.

In einigen Ausführungsformen kann die Mobileinheit 15 ein Gehäuse aus einem der folgenden Materialien oder einer Kombination daraus aufweisen: Kunststoff, Metall und Gummi. Das Gehäuse kann ferner an seinen Ecken und/oder Kanten zum Schutz vor Beschädigung ein federndes Material wie Gummi aufweisen. Letzteres kann auch zum Schutz vor einem Abrutschen z. B. beim Transport dienen.

Die zuvor beschriebenen Sensoren liefern maschinenlesbare Informationen, die dem Bediener prozesssicher abgebildet werden. Als Informationsschnittstelle kann die Anzeigeeinheit der Mobileinheit genutzt werden. Alternativ kann eine Anzeige einer Fertigungsanlage oder eine in der Fertigungshalle spezifisch vorgesehene Anzeige genutzt werden. Die auf der Anzeigeneinheit der Mobileinheit dargestellten Daten können nicht immer vollständig den gesamten Informationsgehalt eines Werkstücks abbilden, allerdings kann sie kontextbasiert die für den entsprechenden Fertigungsvorgang notwendigen Daten darstellen, beispielsweise den nächsten Fertigungsvorgang für die Logistik, Teilegeometrie für die Kommissionierung, Bauteiltoleranzen für die Qualitätsprüfung. Darstellungsparameter wie Größe, Farbe, Bewegung und Blinken stellen dabei geeignete Mittel zur Betonung und Unterstützung von aktuell wichtigen Informationen dar.

Ferner kann als exponiertes Element der menschenlesbaren Information eine LED auf der Mobileinheit vorgesehen werden, die dem Menschen durch unterschiedliche Farben, Blinkfrequenzen oder Blinkmuster codierte Informationen visuell mitteilen kann. Eine insbesondere blinkende LED ist auch auf große Entfernungen leichter zu erkennen, als z. B eine Anzeige 17. Deswegen hat eine Signalvorrichtung wie eine LED besondere Vorteile, wenn z. B. eine Mobileinheit 15 gesucht wird. Sie kann von einem Bediener ferngesteuert adressiert werden und sich dann mit einer Signalvorrichtung bemerkbar machen. Zusätzlich oder alternativ kann sie ein Geräuschsignal abgeben. Eine solche ferngesteuerte Adressierung kann beispielsweise durch eine weitere Mobileinheit oder über eine sonstige insbesondere tragbare Vorrichtung, z. B. Smartphone, Tablet, oder über die Analyseeinheit 11 erfolgen. Sie kann aber auch direkt, z. B. über Nahfeldsender (z. B. Bluetooth, NFC, IR), erfolgen.

Im Rahmen einer industriellen Fertigung von Werkstücken in der Stahl- und/oder Blechverarbeitung werden die Mobileinheiten 15 üblicherweise Werkstücken zugeordnet. Optional können Mobileinheiten von Personen in der Fertigung getragen oder an Hilfsmittel wie Transportwagen, Maschinen und Werkzeugen angebracht werden, wodurch auch hier eine (räumliche und digitale) Zuordnung der Mobileinheit zu einer Person, z. B. einem Arbeiter, oder einem Hilfsmittel vorgenommen werden kann, um Vorgänge zu unterstützen und/oder zu erfassen. Die digitale Zuordnung bezieht sich hierbei auf Personen-spezifische oder Hilfsmittelspezifische Informationen.

Beispielsweise zeigt Fig. 3 einen Transportwagen 21 mit einem Werkstück 23 sowie einer Mobileinheit 15'. Der Transportwagen 21 umfasst einen Ablagebereich 24 für dieses oder mehrere solcher Werkstücke 23, die im Rahmen eines Bearbeitungsplans von einer Werkzeugmaschine erzeugt wurden. Die Mobileinheit 15' zeigt beispielsweise eine für diese Werkstücke 23 spezifische Information auf der Anzeige 17 an, die aufgrund der digitalen Zuordnung abrufbar ist.

Die Mobileinheit 15' ist entsprechend dazu ausgebildet, z. B. vom MES 3 Informationen über die abgelegten Werkstücke 23 zu empfangen und für einen Bediener auszugeben. Beispielsweise ist die Mobileinheit 15' z. B. dazu ausgebildet, Information über die Anzahl der abgelegten Werkstücke 23, noch fehlende Werkstücke, einen nachfolgenden Bearbeitungsschritt, einen zugrundeliegenden Auftrag (Kunde), Soll-Material etc. zu empfangen und auf der Anzeige 17 auszugeben. Die Anzeige 17 kann dabei stromsparend eine E-Ink-Anzeige sein.

Ferner kann ein Signal oder Feedback über ein Aktivieren einer Signalabgabevorrichtung, beispielsweise einer oder mehrerer LEDs oder einer akustischen Signalquelle gegeben werden. Allgemein sind derartige Signalabgabevorrichtungen zum Ausgeben von Feedback-Signalen an einen Bediener ausgebildet.

Ferner kann die Mobileinheit 15' (ergänzend) Signaleingabevorrichtungen aufweisen. So können beispielsweise ein Erschütterungssensor (beispielsweise ein Beschleunigungssensor) und/oder ein Lagesensor als Signaleingabevorrichtung vorgesehen werden.

Derartige Mobileinheiten können, insbesondere in Form von solchen kombinierten Signal-, Anzeige- und Ortungseinheiten, als unabhängige Einheiten im Prozessablauf bei der Fertigung eingesetzt werden. Sie können einem oder mehreren Werkstücken 23 räumlich zugeordnet werden und dann von einem Bediener zusammen mit den zugeordneten Werkstücken 23 von Bearbeitungsschritt zu Bearbeitungsschritt/von Werkzeugmaschine 7 zu Werkzeugmaschine 7 gebracht werden.

Eine derartige Mobileinheit kann ferner, insbesondere in Form von solchen kombinierten Signal-, Anzeige- und Ortungseinheiten, in einem Transportwagen, einer Paletten oder allgemein einer bewegbare Werkstücksammelstelleneinheiten integriert werden. Zusammen mit diesen kann sie als unabhängige Einheit im Prozessablauf bei der Fertigung eingesetzt werden. Diese Einheit kann dann einem oder mehreren Werkstücken 23 räumlich zugeordnet werden (indem z. B. auf ihr positioniert werden) und dann von einem Bediener dazu genutzt werden, die zugeordneten Werkstücken 23 von Bearbeitungsschritt zu Bearbeitungsschritt/von Werkzeugmaschine 7 zu Werkzeugmaschine 7 zu bringen.

Die Bereitstellung von Mobileinheiten in der Fertigung kann vielfältig genutzt werden. Im Folgenden werden beispielhafte Nutzungsszenarien skizziert.

Die Mobileinheiten werden über die Sende-Empfangseinheiten 13 mittels Laufzeitanalyse geortet. Die Sende-Empfangseinheiten 13 sind üblicherweise an der Hallendecke, an Hallenwände, Werkzeugmaschinen 7, Lagerstrukturen etc. ortsfest installiert. Die Positionen der Sende-Empfangseinheiten 13 sind zum Beispiel in einem digitalen Lageplan der Fertigungshalle hinterlegt.

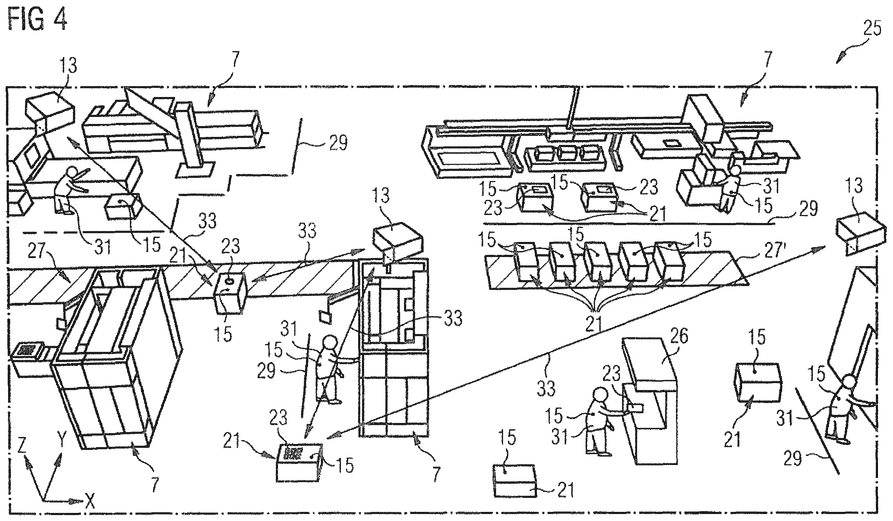

Fig. 4 zeigt einen schematischen digitalen Lageplan 25 einer beispielhaften Fertigungshalle, die mit mehreren Werkzeugmaschinen 7 unterschiedlichen Typs ausgerüstet ist. Beispiele für Werkzeugmaschinen 7 in der Stahl- und Metallverarbeitung sind Schneid-, insbesondere Laserschneidmaschinen, Stanz-, Schleif-, Biegemaschinen etc. Gezeigt ist im Lageplan 25 auch ein zu einem sehr geringen Grad vernetzter Arbeitsplatz 26, wie beispielsweise ein Handarbeitsplatz mit einfachen Maschinen, z. B. zum Bohren, Sägen, Fräsen, Biegen, die keine Vernetzung oder nur eine Vernetzung über ein Überwachungssystem, wie es z. B. in DE 10 2016 220 015.1 beschrieben ist, aufweisen. Ferner erkennt man im Lageplan Zonen 27, 27' und Schranken 29. Die Zonen 27, 27' und Schranken 29 wurden von einem Bediener hinsichtlich der Benutzung der Werkzeugmaschinen 7 und zugehöriger Arbeitsabläufe definiert. Die Schranken 29 erstrecken sich räumlich (beispielsweise linear) in der Fertigungshalle und definieren Grenzen, deren Übertreten durch eine Mobileinheit spezifische Aktionen auslösen kann. Den Zonen 27, 27' und Schranken 29 können allgemein Werkstück-spezifische bzw. Gegenstand/Bediener-spezifische Eigenschaften zugeordnet werden. Eine wie in Fig. 4 dargestellte Ansicht kann z. B. auf einem Bildschirm (Monitor) einer Datenverarbeitungsvorrichtung (z. B. PC) schematisch dargestellt sein. Beim Aktivieren einzelner Zonen, Schranken oder Mobileinheiten auf dem Monitor (z. B. mittels eines Cursors oder bei Touchpads mittels einer Berührung) können Statusinformationen angezeigt werden. Nach bestimmten Mobileinheiten kann gefiltert werden, (z. B. alle Mobileinheiten mit Zuordnung zu Aufträgen eines bestimmten Kunden). Die Temperaturverteilung gemessen mit Temperatursensoren der Mobileinheiten kann angezeigt werden. Der Status von Maschinen kann angezeigt werden, etc.

So können Aktionen unter Nutzung der räumlichen Zuordnung im Fertigungssteuerungssystem ausgelöst werden, wenn eine Mobileinheit sich innerhalb einer spezifischen Zone befindet oder eine spezifische Schranke überschreitet, wobei diese Aktionen in Abhängigkeit des zugehörigen Werkstücks/Gegenstands und dessen Bearbeitung/Bearbeitungszustand, allgemein aufgrund der digitalen Zuordnung, variieren können. Die Zonen 27, 27' und die Schranken 29 können ferner in der Fertigungshalle vor Ort farblich markiert werden.

Ferner erkennt man im Lageplan 25 schematisch Werkstücksammelstellen, beispielsweise Transportwagen 21 oder Teilbereiche von diesem, die sich beispielsweise nahe einer Werkzeugmaschine 7 oder in einer der Zonen 27 befinden. Ferner kennt man schematisch Bediener 31, die die Werkzeugmaschinen 7 bedienen.

Im digitalen Lageplan 25 sind somit nicht nur stationäre Elemente (Werkzeugmaschinen), sondern aufgrund der räumlichen und digitalen Zuordnung der Mobileinheiten auch bewegliche Elemente (Werkstücke, Transportwagen, Bediener) angezeigt. Die Integration von beweglichen Elementen in den Lageplan wird durch die Innenraum-Ortung möglich, indem zum Beispiel den Transportwägen 21 und Bedienern 31 jeweils eigene Mobileinheiten 15 zugeordnet werden.

Ferner erkennt man im digitalen Lageplan 25 beispielhafte Positionen mehrerer Sende-Empfangseinheiten 13. Die Positionen sind derart gewählt, dass mindestens 2 (2D-Ortung) oder 3 und mehr (3D-Ortung) Sende-Empfangseinheiten 13 einem entsprechenden mit der Innenraum-Ortung abzudeckenden Bereich in der Fertigungshalle zugeordnet sind. Beispielhaft werden Laufzeitmessungen für bewegliche Elemente (bzw. die zugeordneten Mobileinheiten 15) über Doppelpfeile 33 in Fig. 4 verdeutlicht.

Die primäre Anwendung des Innenraum-Ortungssystems 5 liegt in der Lokalisierung von Werkstücken 23, allgemein Material, sowie von bei der Fertigung eingesetzten mobilen Einheiten wie Transportwägen 21, Stapler, Werkzeuge und sonstige mobile Vorrichtungen. Dass diese Objekte unter Nutzung der Ortsinformation der Mobileinheit, deren räumlicher Zuordnung und digitaler Zuordnung, die im Wesentlichen nur die Mobileinheit und die Art des zugeordneten Objekts betrifft, einfacher mittels der jeweils zugeordneten Mobileinheit 15 lokalisiert werden kann, reduziert bzw. vermeidet Suchzeiten. Die gewonnene räumliche Information über die Objekte erlaubt zusätzlich eine Analyse von Prozessabläufen und von einer (Aus-) Nutzung von z. B. Werkzeugen.

Die Ortung kann in 2D oder 3D erfolgen. Liegt beispielsweise ein 3D-Lageplan der Fertigungshalle vor (wie in Fig. 4 gezeigt), kann neben der primären horizontalen Lokalisierung auch eine vertikale Lokalisierung vorgenommen werden. Somit ist neben den Koordinaten x und y in der horizontalen Ebene auch die Höhenkoordinate z zu beachten. Eine Ortung in 3D stellt spezifische Anforderungen an die Sende-Empfangseinheiten 13, die den der 3D-Ortung zugrunde liegenden Bereich abdecken, sowie an deren Positionen in der Fertigungshalle.

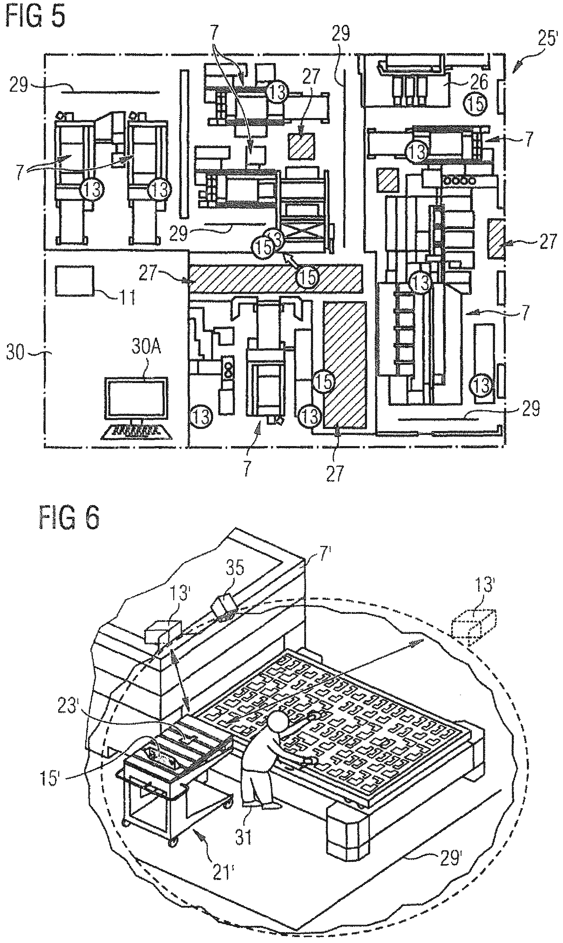

Fig. 5 zeigt eine Aufsicht eines weiteren digitalen Lageplans 25' einer weiteren beispielhaften Fertigungshalle. Man erkennt mehrere Positionen von Sende-Empfangseinheiten 13 (Anchors) und mehrere momentane Positionen von Mobileinheiten (Tags) 15. Ferner erkennt man wiederum mehrere Zonen 27 und Schranken 29. Mit dem Ortungssystem können die Positionen der Mobileinheiten 15 im Lageplan 25' angezeigt werden und ihre Lage bezüglich der Zonen 27 und der Schranken 29 zu Steuerungszwecken bei der Bearbeitung von Werkstücken genutzt werden. Dazu ist es wiederum notwendig, dass einer Mobileinheit 15 ein Werkstück (oder eine Gruppe von Werkstücken) oder ein Bediener, ein Transportmittel, ein Werkzeug etc. zugeordnet wird. In einem Steuerungsbereich 30 ist die Lage einer Fertigungssteuerungseinrichtung des Fertigungssteuerungssystems 1 angedeutet. Hier kann sich die Analyseeinheit 11 befinden. Hier kann sich auch eine Datenverarbeitungsvorrichtung 30A (z. B. PC) mit einem Bildschirm (Monitor) befinden, auf dem z. B. der in Fig. 4 oder Fig. 5 dargestellte digitale Lageplan 25 oder 25' angezeigt wird.

Insbesondere die digitale Zuordnung einer Mobileinheit zu einem Werkstück (oder einem bei der Fertigung eingesetzten Gegenstand wie einem Werkzeug) kann durch verschiedene Interaktionen mit dem Fertigungssteuerungssystem 1 (nachfolgend auch kurz der Fertigungssteuerung) erfolgen. Die folgenden Beispiele sind nicht erfindungsgemäß und dienen lediglich der Veranschaulichung. Beispielsweise kann in einem Bediener-Interface der Fertigungssteuerung, das zum Beispiel auf einem Smartphone oder Tablet bereitgestellt wird, das jeweilige Werkstück/der jeweilige Gegenstand ausgewählt und der spezifischen Mobileinheit durch Eingabe beispielsweise einer zugehörigen Referenznummer zugeordnet werden. Alternativ kann nach Auswahl eines Werkstücks/Gegenstands im Benutzer-Interface die Mobileinheit durch Aktivieren einer Eingabetaste an der Mobileinheit (siehe z. B. Taste 19 in Fig. 2) und dem zugeordneten Datenaustausch der Mobileinheit mit der Fertigungssteuerung die Zuordnung hergestellt werden.

Erfindungsgemäß erfolgt automatisiert oder teilautomatisiert eine Aktivierung der Mobileinheit durch eine vorgegebene Bewegung zur Aktivierung, z. B. Schütteln, Klopfen oder Vibrieren derselben. Eine solche vorgegebene Bewegung kann beispielsweise ein in der Mobileinheit zusätzlich vorgesehener Beschleunigungssensor erkennen. Ferner kann eine teilautomatisierte Zuordnung durch manuelles Kenntlichmachen einer spezifischen Mobileinheit (z. B. durch Schütteln der Mobileinheit) an einem spezifischen Ort (z. B. einer definierten Zone 27) erfolgen. Dabei kann die Fertigungssteuerung dem spezifischen Ort des z. B. Schüttelns spezifisch zu bearbeitende Werkstücke zuordnen. Beispielsweise kann die Fertigungssteuerung auch auf eine Verknüpfung einer Mobileinheit mit einem Default-Gegenstand (z. B. einem leeren Rollwagen) bei Schütteln der Mobileinheit an einem definierten Zuordnungsbereich (z. B. Zone 27' in Fig. 4) schließen.

Ferner kann beispielsweise mittels Bildverarbeitung eine Aufnahme der Mobileinheit, die beispielsweise mit einer Kennzeichnung wie einem Barcode versehen ist (siehe Anzeige in Fig. 2), und des zugeordneten Werkstücks/Gegenstands die Zuordnung vorgenommen werden.

Des Weiteren kann eine grafische Zuordnung über einen am Bediener-Interface dargestellten Dialog vorgenommen werden.

Im Ortungssystem können je nach Anwendung aktive oder inaktive Mobileinheiten eingesetzt werden. Aktive Mobileinheiten teilen permanent in einer gewünschten Wiederholrate zyklisch ihre Position dem Fertigungssteuerungssystem mit. Allgemein werden aktive, wiederholt (periodisch) emittierende Sender auch als "beacon" (Leuchtfeuer) bezeichnet. Dagegen nimmt eine inaktive Mobileinheit zeitweise nicht an einer Ortserkennung teil. Dies kann zum Beispiel dann der Fall sein, wenn der letzte mutmaßliche Standort der Mobileinheit bekannt ist, das zugeordnete Werkstück für einen längeren Zeitraum eingelagert wird, eine Auftragsbearbeitung ausgesetzt wird oder längere Liegezeiten zwischen Bearbeitungsvorgängen zu erwarten sind.

Für die Überwachung derartiger Zustände können in der Mobileinheit vorgesehene Sensoren wie ein Beschleunigungssensor, ein Lagesensor oder ein Schallsensor eingesetzt werden. Allgemein kann ein Wechsel vom inaktiven in den aktiven Zustand durch (digitale) Signale oder manuelle Manipulation ausgelöst werden. Eine manuelle Manipulation kann beispielsweise durch eine gezielte Erschütterung der Mobileinheit (z. B. manuelles Schütteln) oder durch den Beginn des Transports des Werkstücks (Transfer durch eine Schranke 29) erfolgen. Für aktive Mobileinheiten können Mobileinheit-spezifisch beliebige Wiederholraten definiert werden. Mit Regelwerken können hier entsprechend der Kontext-Informationen sinnvolle Verhaltensmuster für jede Mobileinheit bzw. das zugeordnete Werkstück oder einen Gegenstand definiert werden. Kontext-Informationen können beispielsweise eine Zonen-Zugehörigkeit, zuletzt passierte räumliche Schranken, ein jeweils aktiver Bearbeitungsvorgang, ein aktuelles Zeitfenster (Tag/Nacht/Wochentag) und eine spezifische Tag-Familie umfassen.

In einem Nutzungsszenario soll eine Person, z. B. ein Bearbeiter, gemäß einem Auftrag Werkstücke 23 biegen. Hierzu greift er auf Daten aus dem Fertigungssteuerungssystem (MES; Produktionsleitsystem) zu und öffnet beispielsweise den digitalen Lageplan 25, 25' der Fertigungshalle. Wurden die Werkstücke mit einer Mobileinheit 15 (Werkstück-Tag) versehen, wird ihm der Ort der zu biegenden Werkstücke 23 anhand einer zugeordneten Mobileinheit 15 im Lageplan 25, 25' angezeigt,. Beispielsweise wurden die Mobileinheit 15 und die Werkstücke 23 auf einem Transportwagen 21 abgelegt und die Mobileinheit 15 sowohl den Werkstücken 23 als auch dem Transportwagen 21 zugeordnet. Entsprechend kann im Lageplan das Symbol Transportwagen z. B. zusammen mit einer schematischen Form des Werkstücks angezeigt werden.

Zur Verdeutlichung zeigt Fig. 6 einen Absortiervorgang eines Bedieners 31, der Schnittgut einer Laserschneidmaschine 7' auf den Transportwagen 21' sortiert/ablegt. Eine Mobileinheit 15' wurde gemäß einem spezifischen Auftrag aktiviert (Bearbeitungsplan-Zuordnung) und den Werkstücken 23' zugeordnet (räumliche Zuordnung). Nach dem erfolgten Absortiervorgang hat der Bediener 31 beispielsweise eine Taste der Mobileinheit 15' aktiviert, sodass das Fertigungssteuerungssystem vom Abschluss des Absortiervorgangs informiert wird.

Damit weiß der Bediener der nachfolgend zu benutzenden Werkzeugmaschine, an welcher Stelle in der Fertigungshalle die Werkstücke zu finden sind (Nutzung der Ortsinformation der Mobileinheit). Ist der Bediener dort angekommen, was mithilfe einer vom ihm getragenen Mobileinheit und einem Passieren einer Schranke 29' erkannt und an das Fertigungssteuerungssystem weitergeleitet wurde, und stehen mehrere Transportwägen eng zusammen, kann der Bediener den richtigen Transportwagen identifizieren, indem das Fertigungssteuerungssystem automatisch eine LED (Signalabgabevorrichtung) an der entsprechenden Mobileinheit aktiviert, sodass diese beispielsweise blinkt. An diesem optischen Signal kann der Bediener den richtigen Transportwagen erkennen und zu seinem Biege-Arbeitsplatz mitnehmen. Die Abholung des Transportwagens wird beispielsweise an das Fertigungssteuerungssystem weitergegeben, sobald der Bediener den Transportwagen 21' abholt und über die Schranke 29' schiebt.

Das Innenraum-Ortungssystem erlaubt ferner eine Indizierung von Hochlagern im Bestand. Beispielsweise kann über ein Barometer der Mobileinheiten (3D-Tag) die Höhe der Mobileinheit und damit die "Zeile" in einem Lager identifiziert werden. Über mindestens zwei Sende-Empfangseinheiten (2D-Ortung) kann die Spalte des Lagers identifiziert werden. Bei der Präsenz von Mobileinheiten im Lagerkörper kann damit direkt das jeweilige Lagerfach für beispielsweise eine mit der Mobileinheit ausgerüstete Palette im Fertigungssteuerungssystem hinterlegt werden. Entsprechend kann ein Bediener die Palette mit Angabe des Lagerfachs direkt auffinden. Alternativ können drei oder mehr Sende-Empfangseinheiten im Hochlager derart positioniert werden, dass auch eine Ortsbestimmung im dreidimensionalen Raum möglich wird.

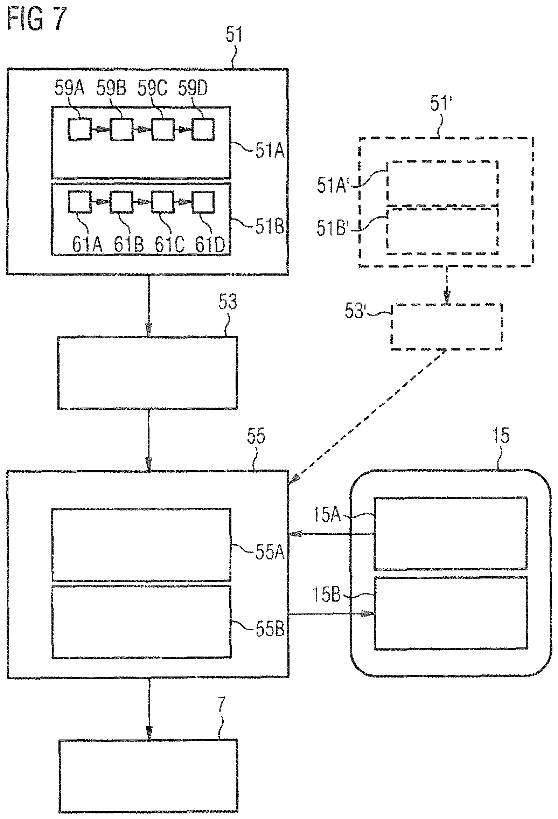

Die Einbindung der hierin beschriebenen mit einem Innenraum-Ortungssystem unterstützten Fertigung wird zusammenfassend in Verbindung mit Fig. 7 erläutert. Hierbei wird u. a. ergänzend auf die Figuren 1 bis 3 und 6 Bezug genommen.

Fig. 7 zeigt beispielhaft Verfahrensschritte eines Verfahrens zur Fertigungssteuerung von Prozessabläufen bei der industriellen Bearbeitung von Werkstücken 23, wobei das Verfahren durch eine Innenraum-Ortung unterstützt wird. Für das Verfahren wird entsprechend eine wie zuvor beschriebene Innenraum-Ortung bereitgestellt (Schritt 51), und es werden Zuordnungsvorgänge durchgeführt, um eine Mobileinheit 15 einem oder mehreren Werkstücken 23 zuzuordnen. Die Zuordnungsvorgänge umfassen einen Mobileinheitsdaten-Zuordnungsvorgang (Schritt 51A) - d. h., die zuvor beschriebene digitale Zuordnung - und einen räumlichen Zuordnungsvorgang (Schritt 51B) - d. h., die zuvor beschriebene physische Zuordnung.

Der Mobileinheitsdaten-Zuordnungsvorgang des Schritts 51A ist schematisch in Fig. 1 im Fertigungssteuerungssystem 1 angedeutet. Im Fertigungssteuerungssystem 1 sind Bearbeitungspläne 37 abgelegt. Ein Bearbeitungsplan 37 kann - als Beispiele für einen Bearbeitungsplan-Assistenz-Werkstückdatensatz - einen Geometriedatensatz 37A und/oder einen das Werkstück identifizierenden Codierungsdatensatz 37B umfassen. Ferner kann der Bearbeitungsplan 37 einen oder mehrere Bearbeitungs- und Werkstückparameter 37C des entsprechenden Werkstücks 23 umfassen. Überdies stellt das Ortungssystem 5 Mobileinheitsdatensätze 39 bereit, die den Bearbeitungsplänen 37 zugeordnet werden sollen.

Für die digitale Zuordnung kann eine Bilderfassungsvorrichtung 20, die z. B. Teil der Mobileinheit 15 ist, bereitgestellt werden (Schritt 59A). Fig. 2 zeigt hierzu schematisch die Bilderfassungsvorrichtung 20 an der Seitenwand der Mobileinheit 15. Mit der Bilderfassungsvorrichtung 20 kann beispielsweise ein Ausdruck eines Auftragsschreibens mit einer Codierung oder eine Codierung 57 auf dem Werkstück 23 - als Beispiel für einen bearbeitungsplanspezifischen Gegenstand - aufgenommen werden (Schritt 59B). Diese Aufnahme wird dann mit einem Kommunikationssystem von der Mobileinheit 15 an das Fertigungssteuerungssystem 1 übermittelt. Im Fertigungssteuerungssystem 1 wird der Bearbeitungsplan 37, der einen entsprechenden Codierungsdatensatz 37B umfasst, identifiziert (Schritt 59C) und dem Mobileinheitsdatensatz 39, der z. B. zu der Mobileinheit 15 gehört, mit der die Codierung aufgenommen worden war, zugeordnet (Schritt 59D).

Alternativ kann diese Art der digitalen Zuordnung mit jeder in das Fertigungssteuerungssystem 1 eingebundenen bildgebenden Vorrichtung ausgeführt werden, wobei dann ein Mobileinheitsdatensatz einer beliebigen Mobileinheit dem identifizierten Bearbeitungsplan zugeordnet werden kann.

Die räumliche Zuordnung kann von einem Assistenzsystem 41, das bei einer Werkezugmaschine 7 oder allgemein an einem Arbeitsplatz vorgesehen ist, unterstützt werden. Fig. 6 zeigt hierzu eine Werkzeugmaschine 7 mit einem optischen Assistenzsystem, das auf einer Bilddatenerfassung mit einer Kamera 35 basiert und die Zuordnung eines Werkstück zu einer Mobileinheit unterstützt. Dabei werden Mobileinheiten bereitgestellt, denen im Rahmen einer vorausgehenden digitalen Zuordnung (Schritt 51A) Bearbeitungspläne zugeordnet wurden.

Bei der assistierten räumlichen Zuordnung erkennt die Kamera 35 ein absortiertes Werkstück 23 (Schritt 61A) und erzeugt hierzu einen Mess-Assistenz-Werkstückdatensatz 41A (Schritt 61B). Der Mess-Assistenz-Werkstückdatensatz 41A wird mit den Geometriedatensätzen 37A der Bearbeitungspläne 37 im Fertigungssteuerungssystem 1 abgeglichen (Schritt 61C), um den Bearbeitungsplan 37 zu identifizieren, der zum erfassten Werkstück gehört. Das Fertigungssteuerungssystem 1 kann nun z. B. die identifizierte Mobileinheit zur Abgabe eines Signals anregen (LED-Blinken, Tonerzeugung, ...); um ein manuelles räumliches Zuordnen zu erleichtern. Alternativ oder ergänzend kann das Fertigungssteuerungssystem 1 im Rahmen einer automatisierten Zusammenführung von Mobileinheit 15 und erfasstem Werkstück 23 ein Ablegen des erfassten Werkstücks 23 bei der identifizierten Mobileinheit 15 veranlassen (Schritt 61D).

Nach erfolgter Zuordnung wird die Position des zugeordneten Werkstücks 23 durch Lokalisierung der zugeordneten Mobileinheit 15 mit dem Innenraum-Ortungssystem 5 bestimmt (Schritt 53). Die bestimmte Position der zugeordneten Mobileinheit 15 wird nun in die Steuerung der Industriefertigungsanlage zur Fertigung des Endprodukts eingebunden (Schritt 55). Ergänzend oder alternativ kann ferner eine Position eines Werkzeugs, einer Person, eines Transportmittels, einer Werkzeugmaschine und/oder einer Werkstücksammelstelleneinheit bestimmt werden (Schritte 51', 51A', 51B', 53') und in die Steuerung der Industriefertigungsanlage eingebunden werden.

Die Einbindung kann beispielsweise ein Definieren (Schritt 55A) von Zonen 27 und/oder räumlichen Schranken 29 in der Fertigungshalle, insbesondere in einem Lageplan 25, 25' der Fertigungshalle, und ein Abgleichen (Schritt 55B) der bestimmten Position hinsichtlich der Zonen 27 und/oder der räumlichen Schranken 29 umfassen.

Im Lageplan der Fertigungshalle kann im Schritt 55A z. B. eine Zone (Werkzeugmaschinen-Zone) um Werkzeugmaschinen/ Bearbeitungsplätze, beispielsweise um die Biegemaschine, erstellt werden. Dabei kann diese Zone als Volumenkörper (3D-Zone) definiert werden, der beispielsweise bis zu einer Höhe von 1,5 m über dem Hallenboden reicht. Wird ein Transportwagen mit Werkstücken und einer zugehörigen Mobileinheit (Wagen-Tag) mit zu einem Auftrag gehörenden Werkstücken in diese Zone geschoben, registriert das Fertigungssteuerungssystem im Schritt 55B dies.

Die Unterstützung der Fertigungssteuerung von Prozessabläufen kann dabei die hierin diskutierten Einbindungsmöglichkeiten der Mobileinheit umfassen. Z. B. kann eine zusätzliche Übertragung von Signalen zwischen dem Fertigungssteuerungssystem 1 und der Mobileinheit 15 zum Austausch von Information stattfinden. Die Signale können von einer Signaleingabevorrichtung 15A der Mobileinheit 15 - z. B. ein Sensor, eine Taste 19 oder die Bilderfassungsvorrichtung 20 - oder von Signalabgabevorrichtungen 15B der Mobileinheit 15 - z. B. eine Anzeigeneinheit 17, eine LED oder ein Lautsprecher - erzeugt werden.

Ferner kann die Unterstützung der Fertigungssteuerung von Prozessabläufen über das Fertigungssteuerungssystem 1 Bearbeitungsparameter auf den Werkzeugmaschinen 7 ansteuern oder allgemein Fertigungsparameter einstellen, die sich z. B. auch auf die Fertigungshalle oder auf eine nachfolgende Datenanalyse beziehen können.

Als weiteres Beispiel für die Einbindung in die Fertigungssteuerung kann unter Nutzung der digitalen Zuordnung des Schritts 51A das Fertigungssteuerungssystem den zugehörigen Bearbeitungsauftrag am Bearbeitungsplatz (beispielsweise an der Biegemaschine) anmelden. Ferner können weitere Sekundäraktionen automatisch initiiert werden. So kann ein zugehöriges Bearbeitungsprogramm in der Werkzeugmaschine automatisch geladen werden. Dies kann es erlauben, dass die Werkzeugmaschine (beispielsweise eine Biegemaschine) über einen Tool-Master automatisch gerüstet wird. Auf einem zugeordneten Bildschirm können einem Bediener für den nun anstehenden Bearbeitungsvorgang (Arbeitsgang) notwendige Informationen angezeigt werden. Beispielsweise können eine Abbildung der ursprünglichen Form des Werkstücks sowie die gebogene Form des Werkstücks, die Anzahl der zu biegenden Werkstücke und/oder der anschließend nachfolgende Bearbeitungsvorgang etc. angezeigt werden.

Ein Vorteil bei der Bearbeitung in Zusammenhang mit definierten Zonen und Schranken liegt darin, dass der Bearbeiter nichts weiter machen muss, als die mit der zugehörigen Mobileinheit gekennzeichneten Werkstücke in die zugehörige Werkzeugmaschinen-Zone zu bringen, wodurch die verschiedenen vorbereitenden Maßnahmen automatisiert veranlasst wurden. Wie erwähnt kann die Werkzeugmaschine z. B. sofort automatisch auf den neu zu bearbeitenden Auftrag eingestellt werden. Dadurch kann erheblich Zeit eingespart werden und Fehler können vermieden werden.

Beginnt der Bediener nun die Werkstücke des Auftrags zu bearbeiten (zum Beispiel zu biegen), kann er die Mobileinheit nehmen und diese an aktive Komponenten der Werkzeugmaschinen, beispielsweise an den Biegebalken, heften. Dort ist eine weitere Zone (Buchungszone) definiert, die automatisch den Auftrag in Bearbeitung nimmt und dies an das Fertigungssteuerungssystem weitergibt. Beispielsweise können so die vorgenommenen Biegevorgänge überwacht und für den Auftrag abgespeichert werden. Wurden alle Werkstücke bearbeitet (gebogen), wird die mobile Einheit aus der Buchungszone entfernt, wodurch der Auftrag beispielsweise als vollständig ausgeführt im Fertigungssteuerungssystem verbucht werden kann.

Auch hier kann durch die Verwendung der Mobileinheit in einem Ortungssystem erheblich Zeit eingespart werden, da der Bediener keine komplizierten Buchungen an einem Terminal vornehmen muss.

Interagiert eine Mobileinheit mit dem Fertigungssteuerungssystem oder betätigt ein Bediener Zusatzfunktionen (Eingabetasten etc.) einer Mobileinheit, kann der Bediener von den Mobileinheiten Feedback oder Mitteilungen über Ausgabemittel wie RGB-LED, Vibration, angezeigten Text oder Ton erhalten. So kann beispielsweise der Status einer Mobileinheit oder eines zugehörigen Auftrags visualisiert werden, beispielsweise indem eine LED grün leuchtet, solange sich der Auftrag im Zustand der Bearbeitung befindet. Ferner kann Feedback oder eine Mitteilung an nachfolgende Bearbeitungsplätze gegeben werden. So kann die automatische Buchung eines abgeschlossenen Bearbeitungsvorgangs den nachfolgenden Prozess darauf aufmerksam machen, dass die Teile nun bereit stehen und wo sie sich befinden. Allgemein kann eine Auslösung von Aktionen wie das Buchen über Zonen noch weiter angereichert werden, sodass beispielsweise Werkstücke während der verschiedenen Bearbeitungsvorgänge zeitlich überwacht werden können.

Wird zusätzlich zur Ortsposition die Lage-im-Raum einer Mobileinheit gemessen, kann beispielsweise unterschieden werden, ob eine spezifische Mobileinheit waagerecht liegt oder hochkant steht. Dies erlaubt eine weitere Interaktion mit dem Fertigungssteuerungssystem. Beispielsweise kann ein Wagen mit Werkstücken mehrerer Aufträge (d. h., mehreren unterschiedlichen und z. B. unterschiedlich zu bearbeitenden Werkstücken) und mehreren Mobileinheiten in eine Zone geschoben werden. Sollen nicht alle Aufträge gleichzeitig in Bearbeitung genommen werden, kann ein spezifischer Auftrag, der beispielsweise zuerst bearbeitet werden soll, durch ein Senkrechtstellen der entsprechenden Mobileinheit dem Fertigungssteuerungssystem bekanntgegeben werden.

Eine weitere Möglichkeit, dem Fertigungssteuerungssystem über die Mobileinheit Feedback zu geben, ist das bereits angesprochene Schütteln der Mobileinheit oder die Durchführung von spezifischen Gesten-artigen Bewegungen.

Ferner ist es möglich, basierend auf der Anzahl der sich in einer oder mehreren Zonen befindenden Mobileinheiten (beispielsweise gerade aktive und oder inaktive Mobileinheiten) Ereignisse auszulösen oder bevorstehende Ereignisse anzuzeigen. Beispielsweise können Kommissioniervorgänge oder Transportaufgaben ausgelöst werden.

Neben stationären Zonen können zusätzlich Zonen dynamisch mit einem oder mehreren Mobileinheiten mitwandern. Dies erlaubt beispielsweise den Transport mehrerer Ladungsträger (Transportwägen), und die mitgeführten Aufträge können gemeinsam als Cluster vom Fertigungssteuerungssystem behandelt werden.

Ferner kann eine Mobileinheit zum Beispiel an einem Handarbeitswerkzeug (Werkzeug-Tag) befestigt (räumliche Zuordnung) und digital hinsichtlich des Werkzeugs selbst zugeordnet werden, sodass dieses leichter geortet werden kann. Zudem kann mittels eines in einem derartigen Werkzeug-Tag vorgesehenen Beschleunigungssensors ermittelt werden, wann und/oder wie das Handarbeitswerkzeug genutzt wird.

Durch die Positionsermittlung des Werkzeugs ist es ferner möglich, die Bewegung des Werkzeugs durch den Raum zu messen (Trajektorien-Information/Auswertung). Hierdurch können Informationen darüber generiert werden, wie viele Bauteile bearbeitet wurden oder ob ein Bearbeitungsschritt vergessen wurde etc.

Ferner können weitere Daten über das Ortungssystem übermittelt werden, beispielsweise Fehlermeldungen durch entsprechende Bewegungsmuster einer Mobileinheit z. B. in einer definierten Fehler-Zone.

Ein weiteres Nutzungsszenario betrifft die Erfassung von Prozesszuständen, die durch die Positionen von Werkstücken, Menschen, Maschinen und anderen Betriebsmitteln gekennzeichnet sind und die durch eine kognitive Auswertung dieser gemessenen Positionen erfasst werden können. Allgemein lassen die Ortungs- und Sensordaten sowie die Informationen bezüglich Zonen und Schranken eine Vielzahl an Auswertemöglichkeiten zu. So ist es beispielsweise möglich, mittels derartiger Rohdaten Kennzahlen wie Key-Performance-Indikatoren (KPIs) zu erzeugen und detaillierte Analysen zu Optimierung der Fertigungsvorgänge durchzuführen. Diese Analysen (z. B. KPIs) können beispielsweise in Form von "heat maps", als Live-Ansicht oder aggregiert dargestellt werden. Weitere Auswertungsdiagramme wie Spagetti-Diagramme sind so für verschiedene Bearbeitungsvorgänge sofort abrufbar. Dies erlaubt es, Standardkennzahlen, die oft einen großen Aufwand bei der Erhebung erzeugen, auf Knopfdruck verfügbar zu machen, wie z. B. Durchlaufzeit, Wertstromanalyse etc. Zudem können die Abläufe in der Produktion auf Basis der gewonnen Ortungsinformationen mit Hilfe von numerischen Optimierungsverfahren verbessert werden.

Die Nutzung des Ortungssystems erlaubt es auch Personen zu orten, wenn diese eine Mobileinheit (Personen-Tag) bei sich tragen. Neben Werkstücken und Werkzeugen gibt die Ortung von Personen (als Ganzes oder auch lokale Ortungen von Bein, Arm und Hand) wertvolle Information über Abläufe in der Produktion. Nutzungsszenarien hierzu betreffen beispielsweise die Überwachung sicherheitskritischer Bereiche zum Schutze von Personen, insbesondere der Bearbeiter. Ferner können Bewegungsmuster generiert werden, die wiederum z. B. zur Prozess- oder Ergonomie-Verbesserung von Arbeitsplätzen der Bediener ausgewertet werden können. Insbesondere über die synchrone Auswertung beider Hände einer Person, insbesondere eines Bedieners oder Bearbeiters, können detaillierte Informationen über den Fertigungsvorgang und das Werkstück erfasst werden. So kann erfasst werden, dass
- ein Bearbeiter an einer Position X zugegriffen hat;
- ein Bearbeiter ein spezifisches Werkstück von A nach B transportiert hat;
- ein Bearbeiter ein spezifisches Werkstück an einer Position Y abgesetzt hat;
- ein Fertigungsvorgang wie Bohren, Einpressen, ... x-Mal ausgeführt wurde;
- ein Fertigungsvorgang wie Entgraten, Schweißen, ... auf einer spezifischen Trajektorie an einem Werkstück ausgeführt wurde;
- ein Fügeprozess an einer spezifischen Position durchgeführt wurde.

Verschiedene Mobileinheiten können in spezifischen Beziehungsverhältnissen zueinander stehen. Beispielsweise können derartige Mobileinheiten im Rahmen eines spezifischen Fertigungsprozesses in Familien von Mobileinheiten gruppiert werden, um grundlegende (Verhaltens-) Muster für eine bestimmte Anzahl von Mobileinheiten zu definieren. Familien können beispielsweise einem Auftrag, einer Baugruppe, einem Folgeprozess von Werkstücken oder einem zugehörigen Ladungsträger (Transportwagen, Palette, Sammelbehälter) zugeordnet sein. Die Familienzugehörigkeit kann dabei dynamisch im laufenden Bearbeitungsvorgang geändert werden. Mobileinheiten können dabei verschiedenen Familien gleichzeitig angehören. Ferner können Familien von Mobileinheiten eine spezifische Verknüpfung betreffen, beispielsweise alle Ladungsträger, alle Transportmittel, alle Bearbeiter, alle Werkstücke, alle Maschinen etc., oder eine Familie von Mobileinheiten kann einen spezifischen Status einer Mobileinheit betreffen, beispielsweise einen Ladungsstatus der Mobileinheiten.

Entsprechend kann die Analyse wie die Erfassung von Prozesszuständen auf der Auswertung von derartigen Familien von Mobileinheiten basieren.

Über die hierin offenbarte Erweiterung einer Fertigungsanlage mit einer Innenraum-Ortung und Schnittstellen zum Fertigungssteuerungssystem kann die Position der Werkstücksammelstelleneinheiten festgestellt und/oder die Bewegung der Hand eines Bedieners festgehalten werden. Solch eine Ortung über ein Ultra-Wideband-System kann aus vier oder mehr "Anchors" und einem oder mehreren "Tags" aufgebaut werden. Die Anchors dienen als Receiver und können um den Arbeitsraum stationär positioniert werden. Die Tags werden an z. B. allen Werkstücksammelstelleneinheiten und beispielsweise der Hand des Bedieners angebracht und dienen zur Positionsbestimmung derselben. Weitere Systeme zur Innenraum-Ortung umfassen z. B. Bluetooth, WiFi, Infrarot und RFID."

Wird die Werkstücksammelstelleneinheit in ein Ortungssystem integriert, kann mit einem entsprechenden System in der Werkzeugmaschinenhalle, in der mehrere Bearbeitungsmaschinen und/oder Arbeitsplätze vorgesehen sind, über Sender-Empfängersysteme eine Ortung ermöglicht werden.

Ein Bediener, der in einer Schaltzentrale den Bearbeitungsvorgang überwacht und steuert, kann auf seinem Überwachungsmonitor sehen, wo ein spezifischer Auftrag gerade in der Prozesskette steht und wie sein Status gerade ist. Entsprechend kann er auch direkt auf die Anzeigeeinheit zugreifen, um angezeigte Daten (Werkstückinformation) wie Präferenzen, Arbeitsschritte etc. anzupassen. Alternativ oder ergänzend kann dies auch vor Ort mit einer Eingabevorrichtung an der Werkstücksammelstelleneinheit (z. B. Taster, Schalter, Touchpad) erfolgen oder über eine Datenschnittstelle, die einer externen z. B. mobilen Eingabeeinheit Zugang verschafft (Smartphone, Ipad, Smartwatch etc.). Entsprechend weist die Werkstücksammelstelleneinheit z. B. ein Nahfeldfunknetz (Bluetooth, NFC) auf. Dies kann beispielsweise auch als Teil eines Nahfeldortungssystems zur Ortung der Werkstücksammelstelleneinheit eingesetzt werden. Letzteres erleichtert das Finden einer Werkstücksammelstelleneinheit, wenn sie z. B. in einer Vielzahl von Werkstücksammelstelleneinheiten versteckt ist. Beispielsweise wird die Werkstücksammelstelleneinheit gezielt angesteuert, damit die Signalvorrichtung (z. B. eine hell leuchtende LED) aktiviert wird.

Die Nahfeldortung kann ferner beispielsweise beim Absortieren eingesetzt werden, indem z. B. der Ort einer Hand (insbesondere eines intelligenten Handschuhs, der mit dem Ortungssystem wechselwirkt) von der Werkstücksammelstelleneinheit aus geortet wird. Entnimmt die "Hand" eines Bedieners ein Bauteil vom Restgitter, wird der Bauteilort im MES vom Restgitter auf die Hand gebucht. Bewegt sich die Hand in die Nähe eines Ortungssystems der Werkstücksammelstelleneinheit, wird im MES gebucht, dass dieses Teil an der zugehörigen Werkstücksammelstelleneinheit abgelegt wurde. Zum einen kann das Ortungssystem erkennen, dass die Hand mit dem Werkstück in die Nähe kam. Zum anderen kann ein übergeordnetes System (z. B. das MES) die Werkstücksammelstelleneinheit und die Handposition verknüpfen.

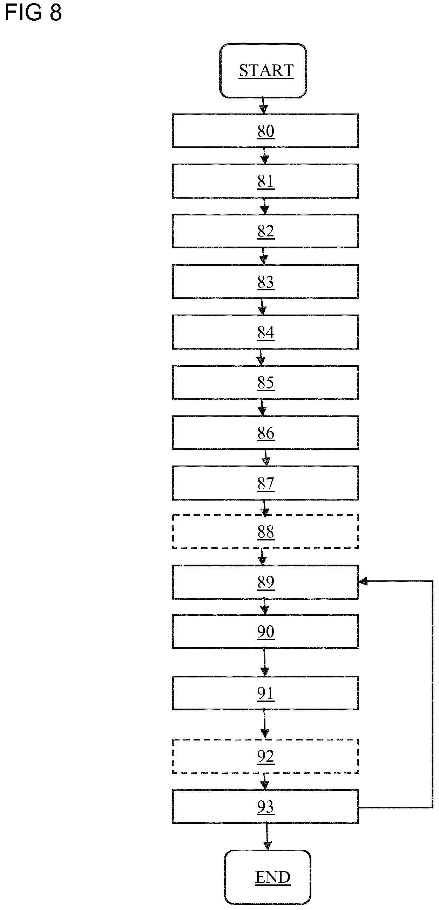

In Fig. 8 sind beispielhaft Verfahrensschritte einer industriellen Fertigung eines Endprodukts gezeigt, die mit einem hierin offenbarten Fertigungssteuerungssystem, insbesondere dem MES 3 durchgeführt werden kann.

In einem ersten Schritt 80 erfolgt die Entgegennahme eines Fertigungsauftrags (mit einem Bearbeitungsplan 37) zur Fertigung eines Endprodukts aus einem Werkstück 23 mit dem MES 3, das z. B. in einer Datenverarbeitungsvorrichtung 30A implementiert ist. In einem folgenden Schritt 81 erfolgt die Auswahl einzelner Bearbeitungsschritte mittels des MES 3. In einem weiteren Schritt 82 erfolgt die Auswahl einer Reihenfolge vom MES 3 (oder einem Bediener), in der die Bearbeitungsschritte durchgeführt werden sollen. Die Bearbeitungsschritte können dabei einzelne oder mehrere der folgenden Vorgänge sein: Schneiden, insbesondere Laserschneiden, Stanzen, Biegen, Bohren, Gewindeschneiden, Schleifen, Zusammenfügen, Schweißen, Nieten, Schrauben, Pressen, Behandeln der Kanten und Oberflächen.

In einem weiteren Schritt 83 erfolgt die datentechnische Zuordnung jedes der Bearbeitungsschritte zu einer Maschine 7 oder einem Arbeitsplatzeinheit. Die Arbeitsplatzeinheit kann ein wie oben beschriebener Arbeitsplatz 26, insbesondere ein Handarbeitsplatz sein.

In einem weiteren Schritt 84 erfolgt die datentechnische Zuordnung des Fertigungsauftrags zu einem Mobileinheitsdatensatz 39, der in der MES 3 für eine Mobileinheit abgelegt ist. Dieser Schritt 84 kann dem in Fig. 7 gezeigten Schritt 51A entsprechen. Schritt 84 kann insbesondere auch schon früher, z. B. nach einem oder mehreren der zuvor beschriebenen Verfahrensschritte, erfolgen.

In einem weiteren Schritt 85 erfolgt die Fertigung eines Werkstücks 23, das zumindest teilweise ein Teil des Endprodukts ist, insbesondere nach einem ersten der Bearbeitungsschritte an der diesem Bearbeitungsschritt zugewiesenen Maschine 7 oder Arbeitsplatzeinheit. Z. B. wird hier ein Teil des Fertigungsauftrags aus einem Blech geschnitten. Da als nachfolgender Bearbeitungsschritt auch noch ein Fräsen oder Stanzen notwendig sein kann, kann dieses Werkstück 23 noch mehr Material als das Endprodukt, also nur teilweise das Endprodukt bilden bzw. ein Teil von diesem sein.

In einem weiteren Schritt 86 erfolgt die räumliche Zuordnung der dem Fertigungsauftrag zugeordneten Mobileinheit 15 zu dem gefertigten Werkstück 23. Dieser Schritt 86 kann dem in Fig. 7 gezeigtem Schritt 51B entsprechen. In einem weiteren Schritt 87 erfolgt das Speichern einer Änderung des Status des Fertigungsauftrags in dem MES 3.

In einem optionalen Schritt 88 erfolgt das Speichern der Position der Mobileinheit 15 zu dem Fertigungsauftrag.

In einem weiteren Schritt 89 erfolgt der Transport des Werkstücks 23 zusammen mit der Mobileinheit 15 gemäß dem Fertigungsauftrag zu der nächsten Maschine 7 oder der nächsten Arbeitsplatzeinheit in der vorbestimmten Reihenfolge. Dies kann in Folge einer Anweisung des MES 3 durch eine Person oder durch einen automatisierten Transportprozess erfolgen.

In einem weiteren Schritt 90 wird dieser Bearbeitungsschritt an der ihm zugewiesenen Maschine 7 oder Arbeitsplatzeinheit durchgeführt.

In einem optionalen Schritt 91 erfolgt das Speichern der Position der Mobileinheit 15 für diesen Fertigungsschritt im Fertigungsauftrag.

In einem weiteren Schritt 92 erfolgt das erneute Speichern einer Änderung des Status des Fertigungsauftrags im MES 3.

In einem weiteren Schritt 93 wird entschieden, ob mit dem Verfahrensschritt 89, d.h., einem Transport zu einem weiteren Bearbeitungsschritt, fortgefahren werden soll oder ob die Fertigung beendet ist.

Während dieser Fertigungsschritte ist stets eine Ortung der Mobileinheit 15 mittels des Ortungssystems 5 auf Basis von elektromagnetischen Signalen gesteuert durch das MES 3 möglich. Damit kann das MES 3 zu jeder Zeit über Daten wie dem aktuellen Status und dem aktuellen Ort des Werkstücks 23 verfügen. MES 3, Mobileinheit 15 und Ortungssystem 5 können insbesondere wie zuvor beschrieben ausgebildet sein.

Alle zuvor beschriebenen Verfahrensschritte, die von einer Fertigungssteuerung, einem Fertigungssteuerungssystem, einem Ortungssystem oder vom MES 3 ausgeführt werden, können auch mittels einer oder mehrerer Datenverarbeitungsvorrichtungen, die Mittel zur Durchführung der Verfahrensschritte aufweisen, realisiert sein.

## Patentansprüche

1. Verfahren zur, durch eine Innenraum-Ortung unterstützten, Fertigungssteuerung von Prozessabläufen bei der industriellen Bearbeitung von Werkstücken (23), in der Stahl- und/oder Blechverarbeitung, in einer Fertigungshalle zur Fertigung eines Endprodukts, mit den Schritten
Bereitstellen (Schritt 51) eines Innenraum-Ortungssystems (5) mit mehreren fest in der Fertigungshalle installierten Sende-Empfangseinheiten (13), mindestens einer Mobileinheit (15) und einer Analyseeinheit (11), wobei die Sende-Empfangseinheiten (13) und die Mobileinheit (15) zum Aussenden und Empfangen von UWB-Radiosignalen ausgebildet sind und die Analyseeinheit (11) ausgebildet ist, aus Laufzeiten der UWB-Radiosignale zwischen den Sende-Empfangseinheiten (13) und der Mobileinheit (15) die Positionen der Mobileinheit (15) in der Fertigungshalle zu bestimmen, wobei die Mobileinheit (15) ferner mindestens einen der folgenden Sensoren aufweist: einen Beschleunigungssensor, einen Lagesensor, einen MEMS-basierten Sensor, einen Barometer-Sensor,
Zuordnen (Schritt 51A, 51B) der Mobileinheit (15) zu mindestens einem Werkstück (23), wobei die Mobileinheit (15) als elektronisches Bauteil ausgeführt ist und zur Feststellung von Laufzeiten über eine eigene Zeitbestimmungseinheit verfügt, wobei die Zuordnung durch eine Aktivierung der Mobileinheit (15) durch eine vorgegebene Bewegung zur Aktivierung erfolgt,
Bestimmen (Schritt 53) der Position des mindestens einen zugeordneten Werkstücks (23) in der Fertigungshalle durch Lokalisierung der zugeordneten Mobileinheit (15) mit dem Innenraum-Ortungssystem (5) und
Einbinden (Schritt 55) der bestimmten Position in die Fertigungssteuerung der Industriefertigungsanlage zur Fertigung des Endprodukts,
ferner mit
Einbinden eines Signals des Sensors in die Steuerung zur Fertigung des Endprodukts, wobei ein Bewegungs- oder Orientierungssignal für die Zuordnung der Mobileinheit (15) zu dem mindestens einen Werkstück (23) verwendet wird,
wobei das Bewegungs- oder Orientierungssignal durch Schütteln der Mobileinheit (15) und/oder spezifische Lagen der Mobileinheit (15) und/oder durch Vornehmen von spezifizierten Gesten mit der Mobileinheit (15) erzeugt wird.

2. Verfahren nach einem der vorhergehenden Ansprüche, wobei
Die Mobileinheit (15) mehreren Werkstücken zugeordnet wird und/oder
Die Mobileinheit (15) nicht fest mit dem mindestens einen Werkstück (23) verbunden ist.

3. Verfahren nach einem der vorhergehenden Ansprüche, wobei die Mobileinheit (15) ferner eine Signalausgabeeinheit, eine optische Signaleinheit, akustische Signaleinheit und/oder Vibrations-Signaleinheit, aufweist, ferner mit
Ausgeben von Informationen zur Bearbeitung des mindestens einen Werkstücks (23) mit der Signalausgabeeinheit, wobei optional Information über die Anzahl von Werkstücken (23), noch fehlende Werkstücke, einen nachfolgenden Bearbeitungsschritt, einen zugrundeliegenden Auftrag, einen Kunden und/oder Soll-Material ausgegeben wird.

4. Verfahren nach einem der vorhergehenden Ansprüche, ferner mit
Zuordnen der Mobileinheit (15) zu einem Bediener (31), einem Transportmittel (21), einer Werkzeugmaschine (7) oder einem Werkzeug,
Bestimmen der Position der einem Bediener (31), einem Transportmittel (21), einer Werkzeugmaschine (7) oder einem Werkzeug zugeordneten Mobileinheit (15) mit dem Innenraum-Ortungssystem (5) und
Einbinden der bestimmten Position in die Steuerung zur Fertigung eines Endprodukts der Industriefertigungsanlage und/oder in eine Bewegungsanalyse des Bedieners (31), des Transportmittels (21), der Werkzeugmaschine (7) oder des Werkzeugs.

5. Verfahren nach einem der vorhergehenden Ansprüche, wobei das Einbinden der bestimmten Position in die Steuerung zur Fertigung eines Endprodukts einen oder mehrere der folgenden Schritte umfasst:
- Abgeben von Signalen zur Unterstützung der Ortung;
- Anzeigen von Information zum Fertigungszustand, auf einem mobilen Ausgabegerät wie einem Tablett, Smartphone oder einem Überwachungsmonitor;
- Einstellen von Betriebsparametern einer Werkzeugmaschine (7);
- Aktualisieren eines Protokolls, das die Fertigung protokolliert;
- Zuordnen der Mobileinheit (15) zu einem Auftrag zur Fertigung eines oder mehrerer Endprodukte in mehreren unterschiedlichen Arbeitsschritten;
- Steuern und/oder Überwachen
einer Bearbeitung des mindestens einen Werkstücks (23) in mehreren unterschiedlichen Arbeitsschritten, die an unterschiedlichen Orten innerhalb der Fertigungshalle durchgeführt werden;
eines Transports des mindestens einen Werkstücks (23) zwischen unterschiedlichen Arbeitsschritten, die an unterschiedlichen Orten innerhalb der Fertigungshalle durchgeführt werden;
einer Bearbeitung des mindestens einen Werkstücks (23) an Arbeitsplätzen, die mit der Fertigungssteuerung vernetzt oder in diese integriert sind; und/oder
einer Bearbeitung des mindestens einen Werkstücks (23) an Arbeitsplätzen, die mit der Fertigungssteuerung nicht vernetzt oder in diese nicht integriert sind.

6. Innenraum-Ortungssystem (5) zur Unterstützung der Fertigungssteuerung von Prozessabläufen bei der industriellen Fertigung von Werkstücken (23) in der Stahl- und/oder Blechverarbeitung, in einer Fertigungshalle mit
mehreren fest in der Fertigungshalle installierten Sende-Empfangseinheiten (13), mindestens einer Mobileinheit (15) und
einer Analyseeinheit (11), wobei die Sende-Empfangseinheiten (13) und die mindestens eine Mobileinheit (15) zum Aussenden und Empfangen von UWB-Radiosignalen ausgebildet sind, wobei die Mobileinheit (15) als elektronisches Bauteil ausgeführt ist und zur Feststellung von Laufzeiten über eine eigene Zeitbestimmungseinheit verfügt, wobei die Mobileinheit (15) ferner mindestens einen der folgenden Sensoren aufweist: einen Beschleunigungssensor, einen Lagesensor, einen MEMS-basierten Sensor, einen Barometer-Sensor, und wobei die Analyseeinheit (11) ausgebildet ist
zum Bestimmen von Laufzeiten der UWB-Radiosignale zwischen den Sende-Empfangseinheiten (13) und der mindestens einen Mobileinheit (15) und
zum Bestimmen der Position der mindestens einen Mobileinheit (15) in der Fertigungshalle aus den Laufzeiten UWB-Radiosignale,
zum Einbinden eines Signals des Sensors in die Steuerung zur Fertigung des Endprodukts, wobei ein Bewegungs- oder Orientierungssignal für die Zuordnung der Mobileinheit (15) zu dem mindestens einen Werkstück (23) verwendet wird, wobei die Zuordnung durch eine Aktivierung der Mobileinheit durch eine vorgegebene Bewegung zur Aktivierung erfolgt,
wobei das Bewegungs- oder Orientierungssignal durch Schütteln der Mobileinheit (15) und/oder spezifische Lagen der Mobileinheit (15) und/oder durch Vornehmen von spezifizierten Gesten mit der Mobileinheit (15) erzeugt wird.

7. Innenraum-Ortungssystem (5) nach Anspruch 6, wobei die mindestens eine Mobileinheit (15) eine Anzeigeeinheit aufweist, die zum Anzeigen von Information des mindestens einen der Mobileinheit (15) zugeordneten Werkstücks und/oder der Position der mindestens einen Mobileinheit (15) in einem Lageplan der Fertigungshalle ausgebildet ist und/oder
ferner mit einer Anzeigeeinheit, die zum Anzeigen der Position der mindestens einen Mobileinheit (15) in einem Lageplan der Fertigungshalle, die von einem Fertigungssteuerungssystem (1) zur Steuerung von Fertigungsprozessen in einer Fertigungshalle bestimmt wurde, ausgebildet ist.

8. Fertigungssteuerungssystem (1) zur Steuerung von Fertigungsprozessen in einer Fertigungshalle einer stahl- und/oder blechverarbeitenden Industriefertigungsanlage, mit
einem Innenraum-Ortungssystem (5) nach Anspruch 6 oder 7, wobei
das Innenraum-Ortungssystem (5) zum Austausch und Bereitstellen von Daten zur Position von mindestens einer Mobileinheit in der Fertigungshalle als Teil des Fertigungssteuerungssystems (1) ausgebildet ist, und
das Fertigungssteuerungssystem (1) dazu ausgebildet ist, die gewonnene Position der mindestens einen Mobileinheit (15) mindestens einem Werkstück (23) zuzuordnen und in die Fertigungssteuerung einzubeziehen.

9. Fertigungssteuerungssystem (1) nach Anspruch 8, ferner mit
einer Anzeigeeinheit, die zum Anzeigen der Position der mindestens einen Mobileinheit (15) in einem Lageplan (25) der Fertigungshalle ausgebildet ist.

10. Fertigungssteuerungssystem (1) nach Anspruch 8 oder 9, wobei das Fertigungssteuerungssystem (1) ferner dazu eingerichtet ist, ein Verfahren nach einem der Ansprüche 1 bis 7 auszuführen.

11. Verwendung eines Innenraum-Ortungssystems (5) nach Anspruch 6.

12. Verwendung eines Innenraum-Ortungssystems (5) nach Anspruch 11, wobei die Verwendung des Innenraum-Ortungssystems (5) ferner zur Zuordnung einer der Mobileinheiten (15) zu einem Bediener (31) in der Fertigung, einem Transportmittel für Werkstücke (23), einer Werkzeugmaschine (7) und/oder einem Werkzeug erfolgt.

13. Verfahren zur industriellen Fertigung eines Endprodukts mittels eines Fertigungssteuerungssystems (1), umfassend ein Verfahren nach einem der Ansprüche 1 bis 5, mit den Schritten:
- Entgegennehmen eines Fertigungsauftrags zur Fertigung des Endprodukts aus einem Werkstück mit einem in einer Datenverarbeitungsvorrichtung implementierten MES (3) des Fertigungssteuerungssystems (1),
- Auswählen einzelner Bearbeitungsschritte mit dem MES (3),
- Bestimmen einer Reihenfolge der Bearbeitungsschritte mit dem MES (3), wobei die Bearbeitungsschritte einzelne oder mehrere der folgenden Vorgänge umfassen: Schneiden, Laserschneiden, Stanzen, Biegen, Bohren, Gewindeschneiden, Schleifen, Zusammenfügen, Schweißen, Nieten, Schrauben, Pressen, Behandeln der Kanten und Oberflächen;
- Datentechnisches Zuordnen der Bearbeitungsschritte zu einer Maschine (7) oder einer Arbeitsplatzeinheit (26),
- Datentechnisches Zuordnen des Fertigungsauftrags zu einem Mobileinheitsdatensatz (39) in dem MES (3),
- Fertigen eines Werkstücks (23) für das Endprodukt, wobei es zu einem Teil des Endprodukts nach einem ersten der Bearbeitungsschritte an der dem Bearbeitungsschritt zugewiesenen Maschine (7) oder Arbeitsplatzeinheit (26) bearbeitet wird,
- Räumliches Zuordnen der dem Fertigungsauftrag zugeordneten Mobileinheit (15) zu dem gefertigten Werkstück (23),
- Speichern einer Statusänderung des Fertigungsauftrags im MES (3),
- Transport des gefertigten Werkstücks (23) zusammen mit der Mobileinheit (15) gemäß dem Fertigungsauftrag zu der nächsten Maschine (7) oder Arbeitsplatzeinheit (26) in der vorbestimmten Reihenfolge,
- Durchführen des Bearbeitungsschritts an dieser Maschine (7) oder Arbeitsplatzeinheit (26),
- Speichern einer Statusänderung des Fertigungsauftrags im MES (3) und
- Durchführen der Bearbeitungsschritte des Fertigungsauftrags mit dem MES (3),
wobei die Position der Mobileinheit (15) mit dem Ortungssystems (5) auf Basis von UWB-Radiosignalen jederzeit durch das MES (3) bestimmbar ist und das MES (3) zu jeder Zeit über Daten zum aktuellen Status und zur aktuellen Position des Werkstücks (23) verfügt.

## Claims

1. A method for the production control of process operations, supported by inner space location determination, in the industrial processing of workpieces (23) in steel and/or sheet metal processing in a production hall for production of an end product, with the steps
providing (step 51) an inner space location determination system (5) with a plurality of transmitter-receiver units (13) installed in a fixed manner in the production hall, at least one mobile unit (15) and an analysis unit (11), wherein the transmitter-receiver units (13) and the mobile unit (15) are designed for transmitting and receiving UWB radio signals and the analysis unit (11) is designed for determining the positions of the mobile unit (15) in the production hall from the transit times of the UWB radio signals between the transmitter-receiver units (13) and the mobile unit (15), wherein the mobile unit (15) further has at least one of the following sensors: an acceleration sensor, a position sensor, a MEMS-based sensor, a barometer sensor,
assigning (step 51A, 51B) the mobile unit (15) to at least one workpiece (23), wherein the mobile unit (15) is executed as an electronic component and has its own timing unit for determining transit times, wherein the assignment is effected by activating the mobile unit (15) by means of a predetermined movement for activation,
determining (step 53) the position of the at least one assigned workpiece (23) in the production hall by localizing the assigned mobile unit (15) with the inner space location determination system (5) and
integrating (step 55) the determined position into the production control of the industrial production plant for producing the end product,
further with
integrating a signal from the sensor into the control system for production of the end product, wherein a movement or orientation signal is used for assigning the mobile unit (15) to the at least one workpiece (23),
wherein the movement or orientation signal is generated by shaking the mobile unit (15) and/or specific positions of the mobile unit (15) and/or by performing specified gestures with the mobile unit (15).

2. The method according to one of the preceding claims, wherein
the mobile unit (15) is assigned a plurality of workpieces and/or
the mobile unit (15) is not firmly connected to the at least one workpiece (23).

3. The method according to one of the preceding claims, wherein the mobile unit (15) further has a signal output unit, an optical signal unit, an acoustic signal unit and/or a vibration signal unit, further with
outputting information for processing the at least one workpiece (23) with the signal output unit, wherein information about the number of workpieces (23), workpieces still missing, a subsequent processing step, an underlying order, a customer and/or target material is optionally outputted.

4. The method according to one of the preceding claims, further with
assigning the mobile unit (15) to an operator (31), a means of transport (21), a machine tool (7) or a tool,
determining the position of a mobile unit (15) assigned to an operator (31), a means of transport (21), a machine tool (7) or a tool using the inner space location determination system (5), and
integrating the determined position into the control system for production of an end product in the industrial production plant and/or into a motion analysis of the operator (31), the means of transport (21), the machine tool (7) or the tool.

5. The method according to one of the preceding claims, wherein the integration of the determined position into the control system for producing an end product comprises one or a plurality of the following steps:
- emitting signals to support location determination;
- displaying information about the production status on a mobile output device such as a tablet, smartphone, or monitoring monitor;
- adjusting the operating parameters of a machine tool (7);
- updating a log that records the production;
- assigning the mobile unit (15) to an order for the production of one or a plurality of end products in a plurality of different work steps;
- controlling and/or monitoring
a processing of the at least one workpiece (23) in a plurality of different work steps which are carried out at different locations within the production hall;
a transporting of the at least one workpiece (23) between different work steps that are performed at different locations within the production hall;
a processing of the at least one workpiece (23) at workstations that are networked with or integrated into the production control; and/or
a processing of the at least one workpiece (23) at workstations that are not networked with or integrated into the production control.

6. An inner space location determination system (5) for supporting the production control of process operations in the industrial production of workpieces (23) in steel and/or sheet metal processing, in a production hall with
a plurality of transmitter-receiver units (13) firmly installed in the production hall,
at least one mobile unit (15); and
an analysis unit (11), wherein the transmitter-receiver units (13) and the at least one mobile unit (15) are designed for transmitting and receiving UWB radio signals, wherein the mobile unit (15) is executed as an electronic component and has its own timing unit for determining transit times, wherein the mobile unit (15) further comprises at least one of the following sensors: an acceleration sensor, a position sensor, a MEMS-based sensor, a barometer sensor, and
wherein the analysis unit (11) is designed
to determine transit times of the UWB radio signals between the transmitter/receiver units (13) and the at least one mobile unit (15) and
to determine the position of the at least one mobile unit (15) in the production hall from the transit times of UWB radio signals,
to integrate a signal from the sensor into the control system for production of the end product, wherein a movement or orientation signal is used to assign the mobile unit (15) to the at least one workpiece (23), wherein the assignment is effected by activating the mobile unit by means of a predetermined movement for activation, wherein the movement or orientation signal is generated by shaking the mobile unit (15) and/or specific positions of the mobile unit (15) and/or by performing specified gestures with the mobile unit (15).

7. The inner space location determination system (5) according to claim 6, wherein the at least one mobile unit (15) has a display unit which is designed to display information of the at least one workpiece assigned to the mobile unit (15) and/or the position of the at least one mobile unit (15) in a layout plan of the production hall and/or
further designed with a display unit for displaying the position of the at least one mobile unit (15) in a layout plan of the production hall, which was determined by a production control system (1) for controlling production processes in a production hall.

8. A production control system (1) for controlling production processes in a production hall of an industrial production plant for processing steel and/or sheet metal, with
an inner space location determination system (5) according to claim 6 or 7, wherein
the inner space location determination system (5) is designed for exchanging and providing data on the position of at least one mobile unit in the production hall as part of the production control system (1), and
the production control system (1) is designed to assign the position obtained of the at least one mobile unit (15) to at least one workpiece (23) and to incorporate it into the production control.

9. The production control system (1) according to claim 8, further with
a display unit that is designed for displaying the position of the at least one mobile unit (15) in a layout plan (25) of the production hall.

10. The production control system (1) according to claim 8 or 9, wherein the production control system (1) is further configured to execute a method according to one of claims 1 to 7.

11. A use of an inner space location determination system (5) according to claim 6.

12. The use of an inner space location determination system (5) according to claim 11, wherein the inner space location determination system (5) is further used to assign one of the mobile units (15) to an operator (31) in production, a means of transport for workpieces (23), a machine tool (7) and/or a tool.

13. A method for the industrial production of an end product by means of a production control system (1), comprising a method according to one of claims 1 to 5, with the steps:
- receiving a production order for production of the end product from a workpiece with an MES (3) of the production control system (1) implemented in a data processing device,
- selecting individual processing steps with the MES (3),
- determining a sequence of processing steps with the MES (3), wherein the processing steps comprise one or a plurality of the following operations: cutting, laser cutting, punching, bending, drilling, thread cutting, grinding, joining, welding, riveting, screwing, pressing, treating the edges and surfaces;
- assigning processing steps to a machine (7) or a workstation unit (26) in a data-driven manner,
- assigning the production order to a mobile unit data record (39) in the MES (3) in a data-driven manner,
- producing a workpiece (23) for the end product, wherein it is processed to become part of the end product after a first of the processing steps on the machine (7) or workstation unit (26) assigned to the processing step,
- spatially assigning the mobile unit (15) assigned to the production order to the finished workpiece (23),
- storing a status change of the production order in the MES (3),
- transporting the finished workpiece (23) together with the mobile unit (15) in accordance with the production order to the next machine (7) or workstation unit (26) in the predetermined sequence,
- performing the processing step on this machine (7) or workstation unit (26),
- storing a status change of the production order in the MES (3), and
- performing the processing steps of the production order with the MES (3),
wherein the position of the mobile unit (15) can be determined at any time by the MES (3) with the help of the location determination system (5) based on UWB radio signals, and the MES (3) has data on the current status and the current position of the workpiece (23) at any time.

## Revendications

1. Procédé de contrôle de fabrication de séquences de processus dans la transformation industrielle de pièces (23), assisté par un positionnement intérieur, lors de l'usinage de l'acier et/ou de la tôle, dans un hall de fabrication pour la fabrication d'un produit final, comprenant les étapes de
fourniture (étape 51) d'un système de positionnement intérieur (5) avec une pluralité d'unités d'émission-réception (13) installées de manière fixe dans le hall de fabrication, au moins une unité mobile (15) et une unité d'analyse (11), dans lequel les unités d'émission-réception (13) et l'unité mobile (15) sont conçues pour émettre et recevoir des signaux radio à ultra large bande, **ULB,** et l'unité d'analyse (11) est conçue pour déterminer les positions de l'unité mobile (15) dans le hall de fabrication à partir des temps de propagation des signaux radio **ULB** entre les unités d'émission-réception (13) et l'unité mobile (15), dans lequel l'unité mobile (15) comprend en outre au moins l'un des capteurs suivants : un capteur d'accélération, un capteur de position, un capteur à base d'un microsystème électromécanique, **MEMS,** un capteur barométrique,
attribution (étape 51A, 51B) de l'unité mobile (15) à au moins une pièce (23), dans lequel l'unité mobile (15) est conçue comme un composant électronique et dispose de sa propre unité d'horloge pour déterminer les temps de propagation, dans lequel l'attribution est réalisée par l'activation de l'unité mobile (15) via un mouvement d'activation prédéterminé,
détermination (étape 53) de la position de ladite au moins une pièce (23) attribuée dans le hall de fabrication par la localisation de l'unité mobile (15) attribuée à l'aide du système de positionnement intérieur (5), et
intégration (étape 55) de la position déterminée dans le contrôle de fabrication de l'installation de fabrication industrielle pour la fabrication du produit final,
comprenant en outre
l'intégration d'un signal provenant du capteur dans le contrôle pour la fabrication du produit final, dans lequel un signal de mouvement ou d'orientation est utilisé pour l'attribution de l'unité mobile (15) à ladite au moins une pièce (23),
dans lequel le signal de mouvement ou d'orientation est généré en secouant l'unité mobile (15) et/ou à des positions spécifiques de l'unité mobile (15) et/ou en effectuant des gestes spécifiés avec l'unité mobile (15).

2. Procédé selon l'une quelconque des revendications précédentes, dans lequel
l'unité mobile (15) est attribuée à plusieurs pièces, et/ou
l'unité mobile (15) n'est pas connectée de manière fixe à ladite au moins une pièce (23).

3. Procédé selon l'une quelconque des revendications précédentes, dans lequel l'unité mobile (15) comprend en outre une unité de sortie de signal, une unité de signal optique, une unité de signal acoustique et/ou une unité de signal de vibration, comprenant en outre
l'envoi d'informations pour la transformation de ladite au moins une pièce (23) à l'aide de l'unité de sortie de signal, dans lequel de l'information optionnelle sur le nombre de pièces (23), les pièces manquantes, une étape de transformation ultérieure, une commande sous-jacente, un client et/ou un matériau cible est éventuellement envoyée.

4. Procédé selon l'une quelconque des revendications précédentes, comprenant en outre
l'attribution de l'unité mobile (15) à un opérateur (31), à un moyen de transport (21), à une machine-outil (7) ou à un outil,
la détermination de la position de ladite unité mobile (15), attribuée à un opérateur (31), un moyen de transport (21), une machine-outil (7) ou un outil, à l'aide du système de positionnement intérieur (5), et
l'intégration de la position déterminée dans le contrôle pour la fabrication d'un produit final de l'installation de fabrication industrielle et/ou dans une analyse de mouvement de l'opérateur (31), du moyen de transport (21), de la machine-outil (7) ou de l'outil.

5. Procédé selon l'une quelconque des revendications précédentes, dans lequel l'intégration de la position déterminée dans le contrôle pour la fabrication d'un produit final comprend une ou plusieurs des étapes suivantes :
- émission de signaux d'assistance au positionnement ;
- affichage d'information sur l'état de fabrication sur un périphérique de sortie mobile tel qu'une tablette, un smartphone ou un moniteur de surveillance ;
- réglage de paramètres de fonctionnement d'une machine-outil (7) ;
- mise à jour d'un protocole qui dirige la fabrication ;
- attribution de l'unité mobile (15) à une commande de fabrication d'un ou plusieurs produits finaux en plusieurs étapes de travail différentes ;
- contrôle et/ou surveillance
d'une transformation de ladite au moins une pièce (23) en plusieurs étapes de travail différentes, effectuées à différents endroits dans le hall de fabrication ;
d'un transport de ladite au moins une pièce (23) entre différentes étapes de travail, effectuées à différents endroits dans le hall de fabrication ;
d'une transformation de ladite au moins une pièce (23) à des postes de travail qui sont en réseau avec le contrôle de fabrication ou sont intégrés dans celui-ci ; et/ou
d'une transformation de ladite au moins une pièce (23) à des postes de travail qui ne sont pas en réseau avec le contrôle de fabrication ou ne sont pas intégrés dans celui-ci.

6. Système de positionnement intérieur (5) pour assister le contrôle de fabrication des séquences de processus dans la fabrication industrielle de pièces (23) lors de l'usinage de l'acier et/ou de la tôle, dans un hall de fabrication comportant
plusieurs unités d'émission-réception (13) installées de manière fixe dans le hall de fabrication,
au moins une unité mobile (15), et
une unité d'analyse (11), dans lequel lesdites unités d'émission-réception (13) et ladite au moins une unité mobile (15) sont conçues pour émettre et recevoir des signaux radio **ULB,** dans lequel l'unité mobile (15) est conçue comme un composant électronique et possède sa propre unité d'horloge pour déterminer les temps de propagation, dans lequel l'unité mobile (15) comprend en outre au moins l'un des capteurs suivants : un capteur d'accélération, un capteur de position, un capteur à base de MEMS, un capteur barométrique, et
dans lequel l'unité d'analyse (11) est conçue
pour déterminer les temps de propagation des signaux radio ULB entre les unités d'émission-réception (13) et ladite au moins une unité mobile (15), et
pour déterminer la position de ladite au moins une unité mobile (15) dans le hall de fabrication à partir des temps de propagation de signaux radio ULB,
pour intégrer un signal du capteur dans le contrôle pour la fabrication du produit final, dans lequel un signal de mouvement ou d'orientation est utilisé pour attribuer l'unité mobile (15) à ladite au moins une pièce (23), dans lequel l'attribution est effectuée par une activation de l'unité mobile via un mouvement d'activation prédéterminé, dans lequel le signal de mouvement ou d'orientation est généré en secouant l'unité mobile (15) et/ou à des positions spécifiques de l'unité mobile (15) et/ou en effectuant des gestes spécifiés avec l'unité mobile (15).

7. Système de positionnement intérieur (5) selon la revendication 6, dans lequel ladite au moins une unité mobile (15) comporte une unité d'affichage conçue pour afficher de l'information sur ladite au moins une pièce attribuée à l'unité mobile (15) et/ou la position de ladite au moins une unité mobile (15) dans un plan d'implantation du hall de fabrication, et/ou
comprenant en outre une unité d'affichage conçue pour afficher la position de ladite au moins une unité mobile (15) dans un plan d'implantation du hall de fabrication, qui a été déterminée par un système de contrôle de fabrication (1) pour contrôler les processus de fabrication dans un hall de fabrication.

8. Système de contrôle de fabrication (1) pour contrôler les processus de fabrication dans un hall de fabrication d'une installation de fabrication industrielle d'usinage de l'acier et/ou de la tôle, comprenant
un système de positionnement intérieur (5) selon la revendication 6 ou 7, dans lequel
le système de positionnement intérieur (5) est conçu pour échanger et fournir des données sur la position d'au moins une unité mobile dans le hall de fabrication dans le cadre du système de contrôle de fabrication (1), et
le système de contrôle de fabrication (1) est conçu pour attribuer la position obtenue de ladite au moins une unité mobile (15) à au moins une pièce (23) et pour l'inclure dans le contrôle de fabrication.

9. Système de contrôle de fabrication (1) selon la revendication 8, comprenant en outre
une unité d'affichage conçue pour afficher la position de ladite au moins une unité mobile (15) dans un plan d'implantation (25) du hall de fabrication.

10. Système de contrôle de fabrication (1) selon la revendication 8 ou 9, dans lequel le système de contrôle de fabrication (1) est en outre configuré pour mettre en œuvre un procédé selon l'une des revendications 1 à 7.

11. Utilisation d'un système de positionnement intérieur (5) selon la revendication 6.

12. Utilisation d'un système de positionnement intérieur (5) selon la revendication 11, dans laquelle l'utilisation du système de positionnement intérieur (5) sert en outre à attribuer l'une des unités mobiles (15) à un opérateur (31) pendant la fabrication, à un moyen de transport pour des pièces (23), à une machine-outil (7) et/ou à un outil.

13. Procédé de fabrication industrielle d'un produit final au moyen d'un système de contrôle de fabrication (1), comprenant un procédé selon l'une des revendications 1 à 5, comprenant les étapes de :
- réception d'une commande de fabrication pour la fabrication du produit final à partir d'une pièce avec un MES (3) du système de contrôle de fabrication (1) implémenté dans un dispositif de traitement de données,
- sélection d'étapes de transformation individuelles avec le MES (3),
- détermination d'une séquence des étapes de transformation avec le MES (3), dans lequel les étapes de transformation comprennent une ou plusieurs des opérations suivantes : découpe, découpe laser, poinçonnage, pliage, perçage, filetage, meulage, assemblage, soudage, rivetage, vissage, pressage, traitement des bords et des surfaces ;
- attribution, basée sur les données, des étapes de transformation à une machine (7) ou à une unité de poste de travail (26),
- attribution, basée sur les données, de la commande de fabrication à un jeu de données d'unité mobile (39) dans le MES (3),
- fabrication d'une pièce (23) pour le produit final, dans lequel elle est usinée en une partie du produit final après une première desdites étapes de transformation sur la machine (7) ou l'unité de poste de travail (26) attribuée à l'étape de transformation,
- attribution spatiale de l'unité mobile (15) attribuée à la commande de fabrication à la pièce (23) fabriquée,
- enregistrement d'un changement d'état de la commande de fabrication dans le MES (3),
- transport de la pièce (23) fabriquée conjointement à l'unité mobile (15) selon la commande de fabrication vers la machine (7) ou l'unité de poste de travail (26) suivante dans la séquence prédéterminée,
- mise en œuvre de l'étape de transformation sur cette machine (7) ou unité de poste de travail (26),
- enregistrement d'un changement d'état de la commande de fabrication dans le MES (3), et
- mise en œuvre de transformation de la commande de fabrication avec le MES (3), dans lequel la position de l'unité mobile (15) avec le système de positionnement (5) peut être déterminée à tout moment par le MES (3) sur la base de signaux radio ULB, et le MES (3) dispose à tout moment de données sur l'état actuel et la position actuelle de la pièce (23).
